(19) Europäisches Patentamt
European Patent Office
Office européen des brevets

(11) EP 4 317 576 A1

(12) **EUROPEAN PATENT APPLICATION**
published in accordance with Art. 153(4) EPC

(43) Date of publication:
**07.02.2024 Bulletin 2024/06**

(21) Application number: **22781203.9**

(22) Date of filing: **30.03.2022**

(51) International Patent Classification (IPC):
***D06M 13/152*** *(2006.01)* ***D06M 11/13*** *(2006.01)*
***D06M 11/45*** *(2006.01)* ***D06M 11/54*** *(2006.01)*
***D06M 13/123*** *(2006.01)* ***D06M 13/127*** *(2006.01)*
***D06M 13/207*** *(2006.01)* ***D06M 13/256*** *(2006.01)*
***D06M 13/288*** *(2006.01)* ***D06M 13/332*** *(2006.01)*
***D06M 15/39*** *(2006.01)* ***D06M 15/65*** *(2006.01)*
***D06M 101/14*** *(2006.01)*

(52) Cooperative Patent Classification (CPC):
**D06M 11/13; D06M 11/45; D06M 11/54; D06M 13/123; D06M 13/127; D06M 13/152; D06M 13/207; D06M 13/256; D06M 13/288; D06M 13/332; D06M 15/39; D06M 15/65;**
D06M 2101/14

(86) International application number:
**PCT/JP2022/016339**

(87) International publication number:
**WO 2022/210993 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061904**
**22.04.2021 JP 2021072336**

(71) Applicant: **Kao Corporation**
**Chuo-ku**
**Tokyo 103-8210 (JP)**

(72) Inventor: **FURUKAWA, Junichi**
**Tokyo 131-8501 (JP)**

(74) Representative: **Hoffmann Eitle**
**Patent- und Rechtsanwälte PartmbB**
**Arabellastraße 30**
**81925 München (DE)**

(54) **FIBER-TREATING AGENT**

(57) A fiber-treating agent comprising the following components (A) to (C) :
(A): a specific phenolic compound
(B) : a salt; and
(C): water.

EP 4 317 576 A1

## Description

Field of the Invention

The present invention relates to a fiber-treating agent for imparting water resistance, heat resistance and washing resistance in heat shape to naturally derived fibers which are used for hair ornament products such as wigs and extensions.

Background of the Invention

Examples of applications of naturally derived fibers include hair ornament products such as wigs and extensions. Unlike synthetic fibers, naturally derived fibers have natural texture and appearance originating from a natural material. Among naturally derived fibers, regenerated protein fibers, for example, regenerated collagen fibers are obtained by solubilizing acid-soluble collagen or insoluble collagen with an alkali or an enzyme to obtain a spinning stock solution, and discharging the spinning stock solution into a coagulation bath through a spinning nozzle to form fibers.

However, regenerated collagen fibers generally have higher hydrophilicity and hence higher water absorption as compared to synthetic fibers, and the fibers have extremely low mechanical strength when they contain a large amount of water. This leads to deterioration of suitability as a hair ornament product such that during shampooing, mechanical strength significantly decreases because of the high water absorption, and during subsequent blowing with a hair drier, rupture occurs.

Regenerated collagen fibers also have the problem of low heat resistance, so that if a set using a hair iron is performed at a temperature as high as that for human hair, shrinkage or crimping occurs, resulting in impairment of visual quality.

Further, in plastic synthetic fibers, the shape in a heat set with a hair iron or the like is continuously memorized even after subsequent hair washing (there is heat shape memory ability), whereas in regenerated collagen fibers, the shape in a heat set with a hair iron or the like is lost through one subsequent hair washing (there is no heat shape memory ability). Therefore, regenerated collagen fibers may be inferior to conventional plastic synthetic fibers in terms of degree of freedom of styling.

The three points described above are a factor in limiting popularization of regenerated collagen fibers which are used for hair ornament products. In particular, water resistance, that is, a decrease in mechanical strength has a significant impact when it is wet. On the other hand, in the field of human hair fibers also used for hair ornament products, a method is known in which to human hair fibers having essentially no heat shape memory ability, a specific aldehyde derivative and phenolic compound are applied for newly imparting heat shape memory ability (Patent Literature 1).

Citation List

Patent Literature

Patent Literature 1: JP-A-2019-143281

Summary of the Invention

The present invention provides a fiber-treating agent comprising the following components (A) to (C):

(A): a phenolic compound selected from the group consisting of the following components (a1) to (a5):

(a1) 2,3,3',4,4', 5'-hexahydroxybenzophenone;
(a2) 5,5',6, 6'-tetrahydroxy-3, 3, 3',3'-tetramethyl-1,1'-spirobiindan;
(a3) a resorcin derivative of formula (1):

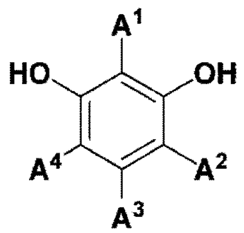

(1)

wherein
$A^1$ to $A^4$ are the same or different, and each represents a hydrogen atom, a hydroxy group, a halogen atom, a sulfonic acid group or a salt thereof, a linear or branched alkyl group or alkenyl group having 1 to 6 carbon atoms, or a linear or branched alkoxy group or alkenyloxy group having 1 to 6 carbon atoms;
(a4) a naphthol derivative of formula (2) or (3):

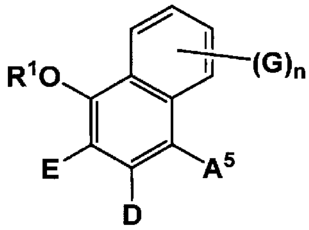

(2)

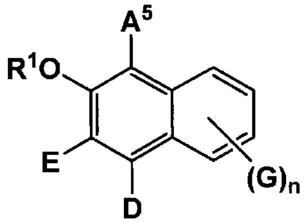

(3)

wherein

$R^1$ represents a hydrogen atom or a methyl group,
$A^5$ represents a hydrogen atom, a linear or branched alkyl group or alkenyl group having 1 to 12 carbon atoms, an optionally substituted aralkyl group or arylalkenyl group having 7 to 12 carbon atoms, a linear or branched alkoxy group or alkenyloxy group having 1 to 6 carbon atoms, a halogen atom or -CO-$R^2$ ($R^2$ is a linear or branched alkyl group or alkenyl group having 1 to 12 carbon atoms, an optionally substituted aralkyl group or arylalkenyl group having 7 to 12 carbon atoms, or an optionally substituted aromatic hydrocarbon group having 6 to 12 carbon atoms),
D represents a hydrogen atom, a hydroxy group, a methyl group, or a linear or branched alkoxy group or alkenyloxy group having 1 to 12 carbon atoms,
E represents a hydrogen atom, a hydroxy group, a linear or branched alkyl group or alkenyl group having 1 to 6 carbon atoms, or an alkoxy group or alkenyloxy group having 1 to 6 carbon atoms, and
G represents a hydroxy group, a linear or branched alkyl group or alkenyl group having 1 to 6 carbon atoms, or an alkoxy group having 1 to 6 carbon atoms, and n represents an integer of 0 to 2; and

(a5) a flavan-3-ol derivative of formula (4):

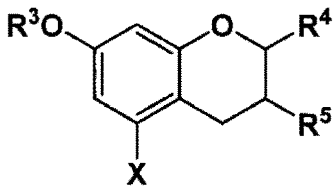

(4)

wherein

$R^3$ represents a hydrogen atom or a methyl group,
X represents a hydrogen atom, a hydroxy group or a methoxy group,
$R^4$ represents an aromatic hydrocarbon group optionally substituted with up to 3 hydroxy groups or methoxy groups and optionally forming a fused ring with 1,3-dioxolane, and
$R^5$ represents a hydroxy group, a methoxy group, an aromatic hydrocarbon group optionally substituted with up to 3 hydroxy groups or methoxy groups and optionally forming a fused ring with 1,3-dioxolane, or

an arylcarbonyloxy group or aralkylcarbonyloxy group optionally substituted with up to 3 hydroxy groups or methoxy groups;

(B): a salt; and
(C): water.

Further, the present invention provides a method for treating fibers, comprising the following step (i):

(i) immersing fibers in the fiber-treating agent.

Further, the present invention provides a method for producing fibers for hair ornament products, comprising the step of treating fibers by the method for treating fibers.
Further, the present invention provides a method for producing a hair ornament product, comprising the step of treating fibers by the method for treating fibers.
Further, the present invention provides a fiber for hair ornament products, comprising the component (A).
Further, the present invention provides a hair ornament product having, as a constituent element, fibers comprising the component (A).

Detailed Description of the Invention

In some situations of production of hair ornament products, fibers are intensively extended, and in the technique disclosed in Patent Literature 1, there are cases where the stretchability (tenacity) of treated fibers is not sufficient. For this reason, it is required to enhance the stretchability of treated fibers for preventing rupture during extension. On the other hand, it is also possible to impart another performance to regenerated collagen fibers if the performance is different from the heat shape memory ability in that after a new shape or stretchability is imparted to the regenerated collagen fibers by a heat set, the imparted shape or stretchability is not eliminated after several washings, but the fibers can be returned to their original state as washing is repeated.
Accordingly, the present invention relates to a fiber-treating agent for producing fibers for hair ornament products in which the water resistance and the heat resistance of naturally derived fibers typified by regenerated collagen fibers are improved, the property of maintaining a shape imparted by a heat set even after several washings (washing resistance in heat shape) is imparted, the fibers are excellent in stretchability (tenacity) and feel, and it is also possible to gradually eliminate imparted performance such as water resistance, heat resistance, a shape, stretchability and a feel.
The present inventor has extensively conducted studies, and resultantly found that by treating naturally derived fibers with a composition containing a specific phenolic compound, not only water resistance and heat resistance in the naturally derived fibers are improved and a shape can be imparted by a heat set, but also surprisingly, the stretchability (tenacity) of the naturally derived fibers is improved as compared to that before the treatment, and can be enhanced to a level close to that of human hair, and the imparted performance is gradually eliminated by performing washing, leading to completion of the invention.
According to the present invention, it is possible to provide a fiber-treating agent for producing fibers for hair ornament products in which the water resistance and the heat resistance of naturally derived fibers are improved, a shape can be imparted by a heat set, stretchability (tenacity) and the feel are improved, and the imparted performance can be gradually eliminated by washing.

[Fibers to be treated in the present invention]

Fibers to be treated with the fiber-treating agent of the present invention may be either synthetic fibers or naturally derived fibers, and are preferably naturally derived fibers. The term "naturally derived" refers to fibers which are taken from a natural animal or plant, or artificially produced using keratin, collagen, casein, soybeans, peanuts, corn, silk flocks, silk protein (for example, silk fibroin) or the like as a raw material and which are used for production of a hair ornament product. Among them, fibers artificially produced using keratin, collagen, casein, soybeans, peanuts, corn, silk flocks, silk protein (for example, silk fibroin) or the like as a raw material are preferable, regenerated protein fibers made from naturally derived protein such as keratin, collagen, casein, soybean protein, peanut protein, corn protein, silk protein (for example, silk fibroin) or the like as a raw material are more preferable, regenerated collagen fibers made from collagen as a raw material and regenerated silk fibers made from silk fibroin as a raw material are further more preferable, and regenerated collagen fibers are further more preferable.
Regenerated protein fibers can be produced by a known technique, are not required to have a composition of naturally derived protein 100%, and may contain a natural or synthetic polymer and additives for improvement of quality. The regenerated protein fibers may be post-processed. Regenerated protein fibers are preferably in the form of filaments.

Filaments are generally taken from fibers wound around a bobbin or packed in a box. It is also possible to directly use filaments coming out from a drying step in a production process of regenerated protein fibers.

[Component (A): specific phenolic compound]

The component (A) is a phenolic compound selected from the group consisting of the following components (a1) to (a5). The molecular weight of the component (A) is preferably 110 or more, and preferably 1 000 or less, more preferably 700 or less, further more preferably 500 or less, from the viewpoint of good infiltration into naturally derived fibers.

(a1) 2,3,3',4,4',5'-hexahydroxybenzophenone;
(a2) 5,5',6, 6'-tetrahydroxy-3,3,3',3'-tetramethyl-1,1'-spirobiindan;
(a3) a resorcin derivative of formula (1):

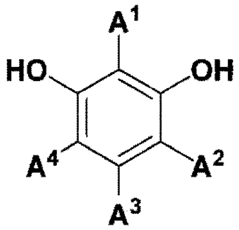

(1)

wherein
$A^1$ to $A^4$ are the same or different, and each represents a hydrogen atom, a hydroxy group, a halogen atom, a sulfonic acid group or a salt thereof, a linear or branched alkyl group or alkenyl group having 1 to 6 carbon atoms, or a linear or branched alkoxy group or alkenyloxy group having 1 to 6 carbon atoms;
(a4) a naphthol derivative of formula (2) or (3):

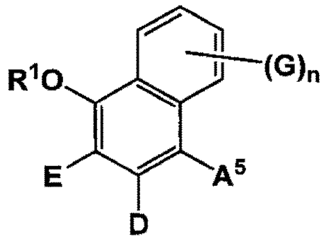

(2)

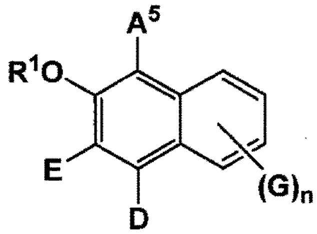

(3)

wherein

$R^1$ represents a hydrogen atom or a methyl group,
$A^5$ represents a hydrogen atom, a linear or branched alkyl group or alkenyl group having 1 to 12 carbon atoms, an optionally substituted aralkyl group or arylalkenyl group having 7 to 12 carbon atoms, a linear or branched alkoxy group or alkenyloxy group having 1 to 6 carbon atoms, a halogen atom or -CO-$R^2$ ($R^2$ is a linear or branched alkyl group or alkenyl group having 1 to 12 carbon atoms, an optionally substituted aralkyl group or arylalkenyl group having 7 to 12 carbon atoms, or an optionally substituted aromatic hydrocarbon group having 6 to 12 carbon atoms),
D represents a hydrogen atom, a hydroxy group, a methyl group, or a linear or branched alkoxy group or alkenyloxy group having 1 to 12 carbon atoms,

E represents a hydrogen atom, a hydroxy group, a linear or branched alkyl group or alkenyl group having 1 to 6 carbon atoms, or a linear or branched alkoxy group or alkenyloxy group having 1 to 6 carbon atoms, and G represents a hydroxy group, a linear or branched alkyl group or alkenyl group having 1 to 6 carbon atoms, or an alkoxy group having 1 to 6 carbon atoms, and n represents an integer of 0 to 2; and

(a5) a flavan-3-ol derivative of formula (4):

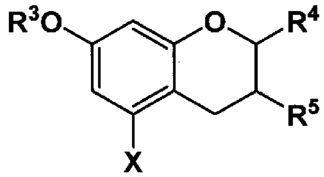

(4)

wherein

$R^3$ represents a hydrogen atom or a methyl group,
X represents a hydrogen atom, a hydroxy group or a methoxy group,
$R^4$ represents an aromatic hydrocarbon group optionally substituted with up to 3 hydroxy groups or methoxy groups and optionally forming a fused ring with 1,3-dioxolane, and
$R^5$ represents a hydroxy group, a methoxy group, an aromatic hydrocarbon group optionally substituted with up to 3 hydroxy groups or methoxy groups and optionally forming a fused ring with 1,3-dioxolane, or an arylcarbonyloxy group or aralkylcarbonyloxy group optionally substituted with up to 3 hydroxy groups or methoxy groups.

Examples of the resorcin derivative of formula (1) as the component (a3) include resorcin, 2-methylresorcin, 4-chlororesorcin, and pyrogallol.

In the naphthol derivative of formula (2) or (3) as the component (a4), $R^1$ in formula (2) or (3) is preferably a hydrogen atom, or an alkyl group or alkenyl group having 1 to 4 carbon atoms, more preferably a hydrogen atom.

$A^5$ is preferably a hydrogen atom, a hydroxy group, a linear or branched alkyl group having 1 to 4 carbon atoms, or an alkoxy group having 1 to 4 carbon atoms, more preferably a hydrogen atom or a hydroxy group.

D is preferably a hydrogen atom, a hydroxy group, a linear or branched alkyl group having 1 to 4 carbon atoms, or an alkoxy group having 1 to 4 carbon atoms.

E is preferably a hydrogen atom, a hydroxy group, an alkyl group having 1 to 4 carbon atoms, or an alkoxy group having 1 to 4 carbon atoms.

Examples of the compound include 1-naphthol, 2-naphthol, 3-methylnaphthalen-1-ol, naphthalene-1,5-diol, and naphthalene-1,8-diol.

The molecular weight of flavan-3-ol derivative of formula (4) as the component (a5) is preferably 150 or more. The molecular weight is preferably 1000 or less, more preferably 700 or less, further more preferably 500 or less, from the viewpoint of good infiltration into fibers.

Examples of the component (a5) include catechin, epicatechin, epigallocatechin, gallocatechin, catechin gallate, epicatechin gallate, gallocatechin gallate, and epigallocatechin gallate (hereinafter, referred to collectively as "catechins"). Among them, one or more selected from the group consisting of catechin, epigallocatechin and epigallocatechin gallate are preferable. It is also possible to use a mixture containing any of the above-described compounds, such as a tea extract.

Analysis of catechins in a mixture can be performed by an analysis method appropriate to a measurement sample among known methods for analyzing non-polymeric catechins. It is possible to perform the analysis by, for example, a liquid chromatography (HPLC) method. In the measurement, treatment may be appropriately performed if necessary, such as freeze-drying of the sample for adaptation to the detection range of an apparatus, or removal of contaminants in the sample for adaptation to the resolution of an apparatus.

From the viewpoint of more significantly changing the shape of naturally derived fibers after treatment with the fiber-treating agent of the present invention, more appropriately controlling the washing resistance in heat shape and the durability of naturally derived fibers, and further improving natural appearance and feel quality, the component (A) is preferably one or more selected from the group consisting of resorcin, 1-naphthol, 2-naphthol, 3-methylnaphthalen-1-ol, naphthalene-1-,5-diol, naphthalene-1,8-diol, catechin, epicatechin, epigallocatechin, gallocatechin, catechin gallate, epicatechin gallate, gallocatechin gallate, epigallocatechin gallate and a tea extract, more preferably one or more selected from the group consisting of resorcin, catechin, epicatechin, gallocatechin, epigallocatechin, catechin gallate, epicatechin gallate, gallocatechin gallate, epigallocatechin gallate and a tea extract.

One component (A) may be used alone, or two or more types may be used in combination. From the viewpoint

of being able to more appropriately control the washing resistance in heat shape and the durability of naturally derived fibers after treatment, and enhancing the feel quality, one or more selected from the group consisting of (a1), (a2), (a3) and (a5) are preferable, and from the viewpoint of making coloring of fibers minimal to enhance suitability for use for hair ornament products, one or more selected from the group consisting of (a1), (a2) and (a5) are preferable.

The content of the component (A) in the fiber-treating agent of the present invention is preferably 0.1 mass% or more, more preferably 1 mass% or more, further more preferably 2.5 mass% or more, even more preferably 5 mass% or more, from the viewpoint of imparting appropriate washing resistance in heat shape and strength to naturally derived fibers after treatment, and preferably 80 mass% or less, more preferably 60 mass% or less, further more preferably 50 mass% or less, even more preferably 40 mass% or less, even more preferably 35 mass% or less, even more preferably 30 mass% or less, from the viewpoint of improving the feel of the fiber surfaces in addition to the above-described viewpoints.

That is, from the viewpoint of imparting appropriate washing resistance in heat shape and strength to treated fibers and improving the feel of fiber surfaces, the content of the component (A) in the fiber-treating agent of the present invention is preferably from 0.1 to 80 mass%, more preferably from 1 to 60 mass%, further more preferably from 2.5 to 50 mass%, even more preferably from 5 to 40 mass%, even more preferably from 5 to 35 mass%, even more preferably from 5 to 30 mass%.

[Component (B): salt]

The fiber-treating agent of the present invention contains a salt as the component (B) for further improving ease of washing and removal of components sorbed in treated fibers. As a salt as the component (B), either an organic salt or an inorganic salt can be used. From the viewpoint of ease of washing and removal, the fiber-treating agent of the present invention is preferably free of a component corresponding to a component (D) described later. For this reason, the component (B) is preferably a salt other than a salt corresponding to the component (D), that is, a salt other than glyoxylic acid salts. Specifically, examples of the organic salt include organic salts having a chelating action, such as sodium citrate, sodium lactate, disodium etidronate, disodium ethylenediaminetetraacetate, disodium catechol-3,5-disulfonate monohydrate and sodium phytate, and sodium mercaptoethanesulfonate, and sodium 2-naphthalenesulfonate, and examples of the inorganic salt include sulfurous acid salts such as sodium sulfite, sodium chloride, and aluminum chlorohydroxy.

Among them, salts of organic acids or inorganic acids having a low reduction action, such as sodium citrate, sodium lactate, disodium etidronate, disodium ethylenediaminetetraacetate, disodium catechol-3,5-disulfonate monohydrate, sodium phytate, sodium 2-naphthalenesulfonate, sodium chloride and aluminum chlorohydroxy are preferable, salts of organic acids having a low reduction action, such as sodium citrate, sodium lactate, disodium etidronate, disodium ethylenediaminetetraacetate, disodium catechol-3,5-disulfonate monohydrate, sodium phytate and sodium 2-naphthalenesulfonate are more preferable, and organic salts which have a low reduction action and which have a chelating action or in which the total number of hydroxy groups, carboxy groups and phosphoric acid groups is 2 or more, such as sodium citrate, sodium lactate, disodium etidronate, disodium ethylenediaminetetraacetate, disodium catechol-3,5-disulfonate monohydrate and sodium phytate are further more preferable.

Here, the term "organic acid or inorganic acid having a low reduction action" refers to an organic acid or an inorganic acid having a standard redox potential (25°C) of -0.5 V or more in an aqueous solution. The standard redox potential (25°C) of an organic acid or an inorganic acid in an aqueous solution is preferably -0.3 V or more, more preferably -0.1 V or more. The standard redox potential (25°C) in an aqueous solution is a value at a standard pressure of 101325 Pa.

The content of the component (B) in the fiber-treating agent of the present invention is preferably 0.01 mass% or more, more preferably 0.1 mass% or more, further more preferably 1 mass% or more, even more preferably 2 mass% or more, even more preferably 3 mass% or more, from the viewpoint of easily removing components sorbed in naturally derived fibers in a short period of time, and preferably 25 mass% or less, more preferably 20 mass% or less, further more preferably 15 mass% or less, even more preferably 10 mass% or less, from the viewpoint of a good feel.

For organic salts having a chelating action, in the component (B), the content in the fiber-treating agent of the present invention is preferably 0.01 mass% or more, more preferably 0.05 mass% or more, further more preferably 0.10 mass% or more, from the viewpoint of easily removing components sorbed in naturally derived fibers in a shorter period of time, and preferably 10 mass% or less, more preferably 5.0 mass% or less, further more preferably 2.5 mass% or less, from the viewpoint of a good feel.

The molar ratio of the component (B) to the component (A), (B)/(A), in the fiber-treating agent of the present invention is preferably 0.01 or more, more preferably 0.05 or more, further more preferably 0.10 or more, even more preferably 0.30 or more, even more preferably 0.50 or more, from the viewpoint of easily desorbing components during washing, and preferably less than 20, more preferably 10 or less, further more preferably 5 or less, even more preferably 3 or less, from the viewpoint of formulation stability.

That is, from the viewpoint of easily desorbing components during washing, the molar ratio of the component

(B) to the component (A), (B)/(A), is preferably 0.01 or more and less than 20, more preferably 0.05 or more and less than 20, further more preferably from 0.10 to 10, even more preferably from 0.35 to 5, even more preferably from 0.50 to 3.

[Component (C): water]

The fiber-treating agent of the present invention has water as a medium. The content of the component (C) in the fiber-treating agent of the present invention is preferably 10 mass% or more, more preferably 20 mass% or more, further more preferably 30 mass% or more, even more preferably 40 mass% or more, and preferably 99 mass% or less, more preferably 98 mass% or less, further more preferably 97 mass% or less, even more preferably 95 mass% or less.

That is, the content of the component (C) in the fiber-treating agent of the present invention is preferably from 10 to 99 mass%, more preferably from 20 to 98 mass%, further more preferably from 30 to 97 mass%, even more preferably from 40 to 95 mass%.

[Cationic surfactant]

The fiber-treating agent of the present invention may contain a cationic surfactant as long as the effects of the present invention are not impaired. The cationic surfactant is preferably a long chain monoalkyl quaternary ammonium salt having one alkyl group having 8 to 24 carbon atoms and three alkyl groups having 1 to 4 carbon atoms.

Preferably, at least one long chain monoalkyl quaternary ammonium surfactant is selected from the group consisting of compounds of the following formula:

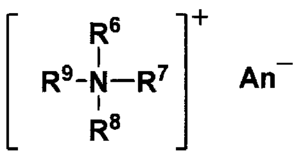

wherein $R^6$ is a saturated or unsaturated linear or branched alkyl group having 8 to 22 carbon atoms, $R^{10}$-CO-NH-$(CH_2)_m$- or $R^8$-CO-O-$(CH_2)_m$- ($R^{10}$ represents a saturated or unsaturated linear or branched alkyl chain having 7 to 21 carbon atoms, and m represents an integer of 1 to 4), $R^7$, $R^8$ and $R^9$ independently represent an alkyl group having 1 to 4 carbon atoms, or a hydroxyalkyl group having 1 to 4 carbon atoms, and $An^-$ represents a hydrochloride ion, a bromide ion, a methosulfate ion or an ethosulfate ion.

Examples of the suitable cationic surfactant include long chain quaternary ammonium compounds such as cetyltrimethylammonium chloride, myristyltrimethylammonium chloride, behentrimonium chloride, cetyltrimethylammonium bromide and stearamidopropyltrimonium chloride. One of them may be used alone, or a mixture thereof may be used.

The content of the cationic surfactant in the fiber-treating agent of the present invention is preferably 0.05 mass% or more, more preferably 0.1 mass% or more, and preferably 10 mass% or less, more preferably 5 mass% or less, from the viewpoint of improving the feel of naturally derived fibers after treatment to further improve the effects of the present invention.

[Silicone]

The fiber-treating agent of the present invention may contain silicone from the viewpoint of improving the feel of naturally derived fibers after treatment, and improving styling ease. The silicone is preferably one or more selected from the group consisting of dimethylpolysiloxane and amino-modified silicone.

As the dimethylpolysiloxane, any of cyclic or acyclic dimethylsiloxane polymers can be used, and examples thereof include SH200 Series, BY22-019, BY22-020, BY11-026, B22-029, BY22-034, BY22-050A, BY22-055, BY22-060, BY22-083 and FZ-4188 (each manufactured by Dow Corning Toray), and KF-9088, KM-900 Series, MK-15H and MK-88 (each manufactured by Shin-Etsu Chemical Co., Ltd.).

As the amino-modified silicone, any silicone having an amino group or an ammonium group can be used, and examples thereof include amino-modified silicone oil which is terminal-blocked at all or a part of terminal hydroxyl groups with a methyl group or the like, and amodimethicone which is not terminal-blocked. Examples of the amino-modified silicone preferable from the viewpoint of improving the feel of naturally derived fibers after treatment and improving styling ease include compounds of the following formula:

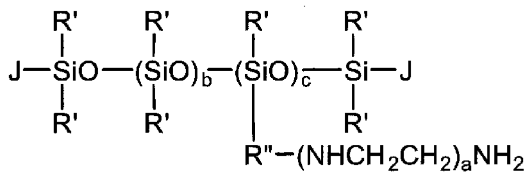

wherein R' represents a hydrogen atom, a hydroxy group or $R^X$, where $R^X$ represents a substituted or unsubstituted monovalent hydrocarbon group having 1 to 20 carbon atoms, J represents $R^X$, R"-($NHCH_2CH_2$)a$NH_2$, $OR^X$ or a hydroxy group, R" represents a divalent hydrocarbon group having 1 to 8 carbon atoms, a represents a number of 0 to 3, and b and c represent numbers whose sum is 10 or more and less than 20 000, preferably 20 or more and less than 3 000, more preferably 30 or more and less than 1 000, further more preferably 40 or more and less than 800, in terms of number average.

Specific examples of the suitable commercially available product of amino-modified silicone include amino-modified silicone oils such as SF8452C and SS3551 (each manufactured by Dow Corning Toray) and KF-8004, KF-867S and KF-8015 (each manufactured by Shin-Etsu Chemical Co., Ltd.), and amodimethicone emulsions such as SM8704C, SM8904, BY22-079, FZ-4671 and FZ4672 (each manufactured by Dow Corning Toray).

The content of the silicone in the fiber-treating agent of the present invention is preferably 0.1 mass% or more, more preferably 0.2 mass% or more, further more preferably 0.5 mass% or more, and preferably 20 mass% or less, more preferably 10 mass% or less, further more preferably 5 mass% or less, from the viewpoint of improving the feel of naturally derived fibers after treatment to further improve the effects of the present invention.

[Cationic polymer]

The fiber-treating agent of the present invention may contain a cationic polymer from the viewpoint of improving the feel of naturally derived fibers after treatment.

The cationic polymer refers to a polymer having a cationic group, or a group capable of being ionized into a cationic group, and also includes a generally cationic ampholytic polymer. That is, examples of the cationic polymer include those in the form of an aqueous solution, which contain an amino group or an ammonium group on the side chain of the polymer chain or contain a diallyl quaternary ammonium salt as a constituent unit, for example, cationized cellulose derivatives, cationic starch, cationized guar gum derivatives, polymers or copolymers of a diallyl quaternary ammonium salt, and quaternized polyvinylpyrrolidone derivatives. Among them, one or more selected from the group consisting of a polymer containing a diallyl quaternary ammonium salt as a constituent unit, a quaternized polyvinylpyrrolidone derivative and a cationized cellulose derivative are preferable, and one or more selected from the group consisting of a polymer or copolymer of a diallyl quaternary ammonium salt and a cationized cellulose derivative are more preferable, from the viewpoint of improving the effects of softness, smoothness and finger-combability in the feel during rinsing and shampooing and ease of styling and moisture retainability during blowing, and the stability of the agent.

Specific examples of the suitable polymer or copolymer of a diallyl quaternary ammonium salt include dimethyldiallylammonium chloride polymers (polyquaternium-6, for example, MERQUAT 100; Lubrizol Advanced Materials, Inc.), dimethyldiallylammonium chloride/acrylic acid copolymers (polyquaternium-22, for example, MERQUATs 280 and 295; Lubrizol Advanced Materials, Inc.), and dimethyldiallylammonium chloride/acrylamide copolymers (polyquaternium-7, for example, MERQUAT 550; Lubrizol Advanced Materials, Inc.).

Specific examples of the suitable quaternized polyvinylpyrrolidone derivative include polymers obtained by polymerizing a vinylpyrrolidone copolymer and dimethylaminoethyl methacrylate (polyquaternium 11, for example, GAFQUAT 734, GAFQUAT 755 and GAFQUAT 755N (Ashland Inc.)).

Specific examples of the suitable cationized cellulose include polymers obtained by adding glycidyltrimethylammonium chloride to hydroxycellulose (polyquaternium 10, for example, LEOGARDs G and GP (Lion Corporation) and POLYMERs JR-125, JR-400, JR-30M, LR-400 and LR-30M (Amerchol Corporation)), and hydroxyethylcellulose dimethyldiallylammonium chloride (polyquaternium-4, for example, CELQUATs H-100 and L-200 (Akzo Nobel N.V.).

The content of the cationic polymer in the fiber-treating agent of the present invention is preferably 0.001 mass% or more, more preferably 0.01 mass% or more, further more preferably 0.05 mass% or more, and preferably 20 mass% or less, more preferably 10 mass% or less, from the viewpoint of improving the feel of naturally derived fibers after treatment.

Further, the fiber-treating agent of the present invention may contain an antioxidant such as ascorbic acid, and a pH adjuster such as sodium hydroxide, potassium hydroxide, phosphoric acid or hydrochloric acid.

From the viewpoint of maintaining ease of washing and removal, the fiber-treating agent of the present invention is preferably free of the component (D) described later.

[pH]

The pH of the fiber-treating agent of the present invention is preferably 3.0 or more, more preferably 3.5 or more, further more preferably 4.0 or more, and preferably 11.0 or less, more preferably 9.0 or less, further more preferably 7.0 or less, from the viewpoint of suppressing damage to naturally derived fibers. The pH in the present invention is a value at 25°C.
That is, the pH of the fiber-treating agent of the present invention is preferably from 3.0 to 11.0, more preferably from 3.5 to 9.0, further more preferably from 4.0 to 7.0, from the viewpoint of suppressing damage to naturally derived fibers.

[Method for storing fiber-treating agent]

When the fiber-treating agent produced as described above is transported and stored before being applied to fibers, or raw materials before preparation of the fiber-treating agent are transported and stored, the storage temperature can be set to a cool temperature or filling nitrogen in space parts in the container for the purpose of preventing coloring of the component (A) by oxidation, and progress of an unintentional reaction during transportation. The storage temperature is preferably 1°C or higher, more preferably 2°C or higher, further more preferably 5°C or higher, from the viewpoint of preventing occurrence of freezing and recrystallization, and preferably 25°C or lower, more preferably 20°C or lower, further more preferably 15°C or lower, from the viewpoint of preventing coloring by oxidation and progress of an unintentional reaction.

[Method for treating fibers]

(Basic treatment)

When using the fiber-treating agent of the present invention, naturally derived fibers are treated by a method comprising the following step (i), it is possible to impart appropriate washing resistance in heat shape and high durability to the naturally derived fibers while maintaining high stretchability (tenacity) of the naturally derived fibers.
step (i) Immersing naturally derived fibers in the fiber-treating agent of the present invention.
In the step (i), the naturally derived fibers immersed in the fiber-treating agent may be dry or wet. The amount of the fiber-treating agent in which the naturally derived fibers are immersed is preferably 2 or more, more preferably 3 or more, further more preferably 5 or more, even more preferably 10 or more, even more preferably 20 or more, and preferably 500 or less, more preferably 250 or less, further more preferably 100 or less, in terms of bath ratio to the mass of the naturally derived fibers (mass of fiber-treating agent/mass of naturally derived fibers).
That is, the bath ratio is preferably from 2 to 500, more preferably from 3 to 250, further more preferably from 5 to 100, even more preferably from 10 to 100, even more preferably from 20 to 100.
In the step (i), the naturally derived fibers may be fixed with a curler or the like, followed by immersion in the fiber-treating agent of the present invention under heating. This enables a desired shape to be imparted to the naturally derived fibers together with appropriate washing resistance in heat shape and high durability.
It is preferable that the immersion of the naturally derived fibers in the fiber-treating agent in the step (i) be performed under heating, and this heating is performed by heating the fiber-treating agent. This heating may be performed by immersing the naturally derived fibers in the fiber-treating agent being heated, or by immersing the naturally derived fibers in the fiber-treating agent at a low temperature, and then performing heating. The temperature of the fiber-treating agent is preferably 20°C or higher, more preferably 35°C or higher, further more preferably 45°C or higher for increasing interaction of the component (A) with fiber constituent molecules, for example protein molecules, in the naturally derived fibers, to obtain the effects of the present invention, and preferably lower than 100°C, more preferably 80°C or lower, further more preferably 70°C or lower, further more preferably 60°C or lower for preventing the naturally derived fibers from being degenerated by heat and thus degraded.
The specific immersion time in the step (i) is appropriately adjusted depending on a heating temperature, and is preferably 15 minutes or more, more preferably 30 minutes or more, further more preferably 1 hour or more, from the viewpoint of exhibiting a stretchability improving effect on naturally derived fibers, and preferably 48 hours or less, more preferably 24 hours or less, further more preferably 12 hours or less for suppressing damage to naturally derived fibers, for example.
It is preferable to carry out the step (i) in an environment where evaporation of moisture is suppressed. Examples of the specific means for suppressing evaporation of moisture include a method in which a container of the fiber-treating agent in which naturally derived fibers are immersed is covered with a film-shaped material, a cap, a lid or the like made of a material impermeable to water vapor.
After the step (i), the naturally derived fibers may be rinsed, or are not required to be rinsed, and it is preferable

to rinse the naturally derived fibers from the viewpoint of preventing deterioration of the feel of the naturally derived fibers by an excess component (A).

These treatments may allow the components (A) and (B) to infiltrate the naturally derived fibers and interact with fiber constituent molecules, for example protein molecules, in the naturally derived fibers.

By performing post-crosslinking treatment of the step (ii-a) or the step (ii-b) after the step (i), the water-resistance of naturally derived fibers can be improved (mechanical strength can be increased when the fibers are wet).

Step (ii-a) immersing naturally derived fibers in a post-crosslinking agent (I) containing components (D) and (C):

(D): at least one formaldehyde derivative selected from the group consisting of formaldehyde, a hydrate of formaldehyde, glyoxylic acid, a hydrate of glyoxylic acid, a glyoxylic acid salt, glyoxal, a hydrate of glyoxal, glutaraldehyde, and a hydrate of glutaraldehyde; and
(C): water.

As the component (D), formaldehyde, a hydrate of formaldehyde, glyoxal, a hydrate of glyoxal, glutaraldehyde, and a hydrate of glutaraldehyde are preferable, and formaldehyde and a hydrate of formaldehyde are more preferable, from the viewpoint of improving the water resistance of naturally derived fibers, that is, increasing mechanical strength when the fibers are wet.

The content of the component (D) in the post-crosslinking agent (I) is preferably 0.01 mass% or more, more preferably 0.1 mass% or more, further more preferably 1 mass% or more, and preferably 60 mass% or less, more preferably 40 mass%, further more preferably 20 mass% or less, from the viewpoint of improving the water resistance of naturally derived fibers, that is, increasing mechanical strength when the fibers are wet.

That is, the content of the component (D) in the post-crosslinking agent (I) is preferably from 0.01 to 60 mass%, more preferably from 0.1 mass% to 40 mass%, further more preferably from 1 to 20 mass%.

Step (ii-b) immersing naturally derived fibers in a post-crosslinking agent (II) containing components (E) and (C):

(E): a compound having a structure in which a methylol group is bonded to each of two nitrogen atoms in the molecule; and
(C): water.

Examples of the component (E) include compounds (E1) to (E4) shown below. Among them, the compounds (E3) and (E4) are preferable, and the compound (E3) is more preferable.

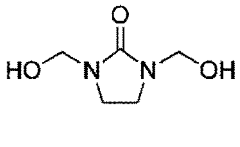
(E1)

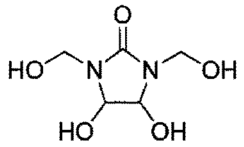
(E2)

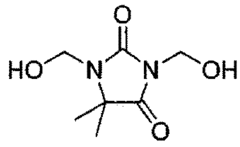
(E3)

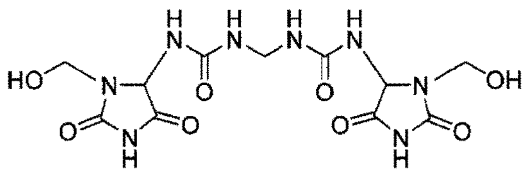
(E4)

The content of the component (E) in the post-crosslinking agent (II) is preferably 0.1 mass% or more, more preferably 1 mass% or more, further more preferably 2.5 mass% or more, even more preferably 5 mass% or more, even more preferably 10 mass% or more, and preferably 80 mass% or less, more preferably 70 mass% or less, further more preferably 60 mass% or less, even more preferably 50 mass% or less, even more preferably 40 mass% or less, from the viewpoint of improving the water resistance of naturally derived fibers, that is, increasing mechanical strength when the fibers are wet.

That is, the content of the component (E) in the post-crosslinking agent (II) is preferably from 0.1 to 80 mass%, more preferably from 1 to 70 mass%, further more preferably from 2.5 to 60 mass%, even more preferably from 5 to 50 mass%, even more preferably 10 to 40 mass%.

Further, the post-crosslinking agent may contain a pH adjuster such as sodium hydroxide, potassium hydroxide, phosphoric acid, hydrochloric acid or an organic acid.

The pH of the post-crosslinking agent is preferably 11.0 or less, more preferably 10.0 or less, further more preferably 9.0 or less, and preferably 2.0 or more, more preferably 3.0 or more, further more preferably 4.0 or more, from the viewpoint of suppressing damage to naturally derived fibers.

That is, the pH of the post-crosslinking agent is preferably from 2.0 to 11.0, more preferably from 3.0 to 10.0, further more preferably from 4.0 to 9.0, from the viewpoint of suppressing damage to naturally derived fibers.

The temperature of the post-crosslinking agent used in the step (ii-a) or (ii-b) is preferably 20°C or higher, more preferably 35°C or higher, further more preferably 45°C or higher, from the viewpoint of optimizing interaction between a component sorbed in naturally derived fibers and a fiber constituent molecule in the naturally derived fibers, for example, a protein molecule, and controlling the effects of the present invention (deformation that can be eliminated and strength), and preferably lower than 100°C, more preferably 80°C or lower, further more preferably 70°C or lower, further more preferably 60°C or lower from the viewpoint of preventing the naturally derived fibers from being degenerated by heat and thus degraded.

In the step (ii-a) or (ii-b), the naturally derived fibers immersed in the post-crosslinking agent may be dry or wet. The amount of the post-crosslinking agent in which the naturally derived fibers are immersed is preferably 2 or more, more preferably 3 or more, further more preferably 5 or more, even more preferably 10 or more, even more preferably 20 or more, and preferably 500 or less, more preferably 250 or less, further more preferably 100 or less, in terms of bath ratio to the mass of the naturally derived fibers (mass of post-crosslinking agent/mass of fibers treated in step (i)).

That is, the mass ratio is preferably from 2 to 500, more preferably from 3 to 250, further more preferably from 5 to 100, even more preferably from 10 to 100, even more preferably from 20 to 100.

The time of immersion of naturally derived fibers in the post-crosslinking agent in the step (ii-a) or (ii-b) is preferably 1 minute or more, more preferably 3 minutes or more, further more preferably 5 minutes or more, and preferably 5 hours or less, more preferably 3 hours or less, further more preferably 1 hour or less, for infiltrating and diffusing the post-crosslinking agent into the naturally derived fibers.

[Optionally added treatment]

In the method for treating fibers according to the present invention, one or more treatments selected from the group consisting of bleaching, dyeing, surface finish for imparting hydrophobicity and reducing friction, and heating treatment for further improving fiber stretchability (tenacity) may be performed in addition to the steps (i) to (ii-a) or the steps (i) to (ii-b).

Here, the treatments of bleaching and dyeing may be performed before or after the step (i) to the step (ii-a) or (ii-b), or between the step (i) to the step (ii-a) or (ii-b). A plurality of steps may be combined and added, and when both bleaching and dyeing are added, any of the treatments may be performed first except that it is necessary to perform bleaching before dyeing. It is also possible to perform another treatment between bleaching and dyeing.

On the other hand, it is necessary that surface finish for imparting hydrophobicity and reducing friction and heating treatment for further improving fiber stretchability (tenacity) be performed after the step (i) to the step (ii-a) or (ii-b). As long as surface finish for imparting hydrophobicity and reducing friction and heating treatment for further improving fiber stretchability (tenacity) are performed after the step (i) to the step (ii-a) or (ii-b) as described above, their treatment order relation with bleaching and dyeing is not particularly limited. One of surface finish for imparting hydrophobicity and reducing friction and heating treatment for further improving fiber stretchability (tenacity) may be performed before or after the other.

(Bleaching)

The bleaching is performed by immersing naturally derived fibers in a bleach composition containing an alkali agent, an oxidizing agent and water. The bleach composition is typically of two-part type. The first part contains an alkali agent and water, and the second part contains an oxidizing agent and water. These two parts are typically stored separately, and mixed before immersion of naturally derived fibers.

Examples of the suitable alkali agent include, but are not limited to, ammonia and salts thereof; alkanolamines (monoethanolamine, isopropanolamine, 2-amino-2-methylpropanol, 2-aminobutanol and the like) and salts thereof; alkanediamines (1,3-propanediamine and the like) and salts thereof; carbonates (guanidine carbonate, sodium carbonate, potassium carbonate, sodium hydrogen carbonate, potassium hydrogen carbonate and the like); and mixtures thereof.

The content of the alkali agent in the bleach composition (mixture of first part and second part for two-agent type) is preferably 0.1 mass% or more, more preferably 0.5 mass% or more, further more preferably 1 mass% or more, and preferably 15 mass% or less, more preferably 10 mass% or less, further more preferably 7.5 mass% or less).

Examples of the suitable oxidizing agent include, but are not limited to, hydrogen peroxide, urea peroxide,

melamine peroxide and sodium bromate. Among these oxidizing agents, hydrogen peroxide is preferable.

The content of the oxidizing agent in the bleach composition is preferably 1 mass% or more, more preferably 2 mass% or more, and preferably 15 mass% or less, more preferably 12 mass% or less, further more preferably 9 mass% or less.

When the first part and the second part are stored separately, the pH of the second part at 25°C is preferably 2 or more, more preferably 2.5 or more, and preferably 6 or less, more preferably 4 or less. The pH can be adjusted by a suitable buffering agent. The pH of the bleach composition at 25°C is preferably 6 or more, more preferably 6.5 or more, further more preferably 6.8 or more, and preferably 11 or less, more preferably 10.5 or less, further more preferably 10 or less.

(Dyeing)

The dyeing is performed by immersing naturally derived fibers in a hair dye composition. The hair dye composition contains a dye, and optionally contains an alkali agent or an acid, an oxidizing agent or the like. Examples of the dye include direct dyes, oxidizing dyes, and combinations thereof.

The type of the direct dye is not particularly limited, and any direct dye suitable for dyeing can be used. Examples of the direct dye include anionic dyes, nitro dyes, disperse dyes, cationic dyes, and dyes having an azo-phenol structure selected from the group consisting of the following HC Red 18, HC Blue 18 and HC Yellow 16, salts thereof, and mixtures thereof.

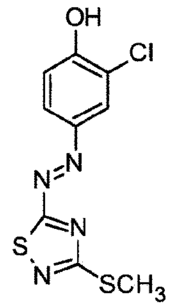

HC Red 18

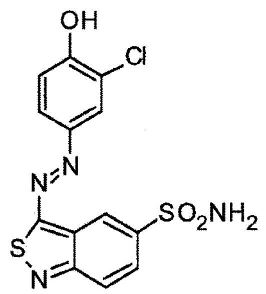

HC Blue 18

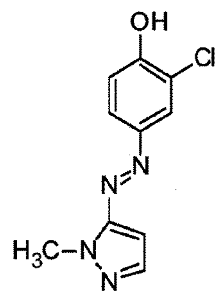

HC Yellow 16

Examples of the cationic dye include, but are not limited to, Basic Blue 6, Basic Blue 7, Basic Blue 9, Basic Blue 26, Basic Blue 41, Basic Blue 99, Basic Brown 4, Basic Brown 16, Basic Brown 17, Natural Brown 7, Basic Green 1, Basic Orange 31, Basic Red 2, Basic Red 12, Basic Red 22, Basic Red 51, Basic Red 76, Basic Violet 1, Basic Violet 2, Basic Violet 3, Basic Violet 10, Basic Violet 14, Basic yellow 57, Basic Yellow 87, and mixtures thereof. Basic Red 51, Basic Orange 31, Basin Yellow 87 and Mixtures thereof are particularly preferable.

Examples of the anionic dye include, but are not limited to, Acid Black 1, Acid Blue 1, Acid Blue 3, Food Blue 5, Acid Blue 7, Acid Blue 9, Acid Blue 74, Acid Orange 3, Acid Orange 4, Acid Orange 6, Acid Orange 7, Acid Orange 10, Acid Red 1, Acid Red 14, Acid Red 18, Acid Red 27, Acid Red 33, Acid Red 50, Acid Red 52, Acid Red 73, Acid Red 87, Acid Red 88, Acid Red 92, Acid Red 155, Acid Red 180, Acid Violet 2, Acid Violet 9, Acid Violet 43, Acid Violet 49, Acid Yellow 1, Acid Yellow 10, Acid Yellow 23, Acid Yellow 3, Food Yellow No. 8, D&C Brown No. 1, D&C Green No. 5, D&C Green No. 8, D&C Orange No. 4, D&C Orange No. 10, D&C Orange No. 11, D&C Red No. 21, D&C Red No. 27, D&C Red No. 33, D&C Violet 2, D&C Yellow No. 7, D&C Yellow No. 8, D&C Yellow No. 10, FD&C Red 2, FD&C Red 40, FD&C Red No. 4, FD&C Yellow No. 6, FD&C Blue 1, Food Black 1, Food Black 2, alkali metal salts (sodium salts, potassium salts and the like), and mixtures thereof.

Among them, preferred anionic dyes are Acid Black 1, Acid Red 52, Acid Violet 2, Acid Violet 43, Acid Red 33, Acid Orange 4, Acid Orange 7, Acid Red 27, Acid Yellow 3, Acid Yellow 10, and salts thereof. More preferred anionic dyes are Acid Red 52, Acid Violet 2, Acid red 33, Acid Orange 4, Acid Yellow 10, and salts and mixtures thereof.

Examples of the nitro dye include, but are not limited to, HC Blue No. 2, HC Blue No. 4, HC Blue No. 5, HC Blue No. 6, HC Blue No. 7, HC Blue No. 8, HC Blue No. 9, HC Blue No. 10, HC Blue No. 11, HC Blue No. 12, HC Blue No. 13, HC Brown No. 1, HC Brown No. 2, HC Green No. 1, HC Orange No. 1, HC Orange No. 2, HC Orange No. 3, HC Orange No. 5, HC Red BN, HC Red No. 1, HC Red No. 3, HC Red No. 7, HC Red No. 8, HC Red No. 9, HC Red No. 10, HC Red No. 11, HC Red No. 13, HC Red No. 54, HC Red No. 14, HC Violet BS, HC Violet No. 1, HC Violet No. 2, HC Yellow No. 2, HC Yellow No. 4, HC Yellow No. 5, HC Yellow No. 6, HC Yellow No. 7, HC Yellow No. 8, HC Yellow No. 9, HC Yellow No. 10, HC Yellow No. 11, HC Yellow No. 12, HC Yellow No. 13, HC Yellow No. 14, HC Yellow No.

15, 2-amino-6-chloro-4-nitrophenol, picramic acid, 1,2-diamino-4-nitrobenzol, 1,4-diamino-2-nitrobenzol, 3-nitro-4-aminophenol, 1-hydroxy-2-amino-3-nitrobenzol, 2-hydroxyethylepicramic acid, and mixtures thereof.

Examples of the disperse dye include, but are not limited to, Disperse Blue 1, Disperse Black 9, Disperse Violet 1, and mixtures thereof.

One of these direct dyes may be used alone, or two or more thereof may be used in combination. Direct dyes different in ionicity may be used in combination.

The content of the direct dye in the hair dye composition is preferably 0.001 mass% or more, more preferably 0.01 mass% or more, further more preferably 0.05 the mass% or more, from the viewpoint of obtaining sufficient dyeability, and preferably 10 mass% or less, more preferably 7.5 mass% or less, further more preferably 5.0 mass% or less, further more preferably 3.0 mass% or less, from the viewpoint of compatibility.

When the hair dye composition contains only direct dyes, an oxidizing agent is not necessary for dyeing naturally derived fibers. When it is desirable that naturally derived fibers be light-colored, the composition may contain an oxidizing agent.

When the hair dye composition contains an oxidizing dye, the composition is typically of two-part type. The first part contains an oxidizing dye intermediate (precursor and coupler) and an alkali agent, and the second part contains an oxidizing agent such as hydrogen peroxide. These two parts are typically stored separately, and mixed before immersion of naturally derived fibers.

The oxidizing dye intermediate is not particularly limited, and it is possible to suitably use any known of precursors and couplers which are commonly used for dyed products.

Examples of the precursor include, but are not limited to, paraphenylenediamine, toluene-2,5-diamine, 2-chloroparaphenylenediamine, N-methoxyethyl-para-phenylenediamine, N-phenylparaphenylenediamine, N,N-bis(2-hydroxyethyl)-paraphenylenediamine, 2-(2-hydroxyethyl)-paraphenylenediamine, 2,6-dimethyl-paraphenylenediamine, 4,4'-diaminodiphenylamine, 1,3-bis(N-(2-hydroxyethyl)-N-(4-aminophenyl)amino)-2-propanol, PEG-3,3,2'-paraphenylenediamine, paraaminophenol, paramethylaminophenol, 3-methyl-4-aminophenol, 2-aminomethyl-4-aminophenol, 2-(2-hydroxyethylaminoethyl)-4-aminophenol, ortho-aminophenol, 2-amino-5-methylphenol, 2-amino-6-methylphenol, 2-amino-5-acetamidophenol, 3,4-diaminobenzoic acid, 5-aminosalicylic acid, 2,4,5,6-tetraaminopyrimidine, 2,5,6-triamino-4-hydroxypyrimidine, 4,5-diamino-1-(4'-chlorobenzyl)pyrazole, 4,5-diamino-1-hydroxyethylpyrazole, salts of these substances, and mixture thereof.

Examples of the coupler include, but are not limited to, metaphenylenediamine, 2,4-diaminophenoxyethanol, 2-amino-4-(2-hydroxyethylamino)anisole, 2,4-diamino-5-methylphenetole, 2,4-diamino-5-(2-hydroxyethoxy)toluene, 2,4-dimethoxy-1,3-diaminobenzene, 2,6-bis(2-hydroxyethylamino)toluene, 2,4-diamino-5-fluorotoluene, 1,3-bis(2,4-diaminophenoxy)propane, metaaminophenol, 2-methyl-5-aminophenol, 2-methyl-5-(2-hydroxyethylamino)phenol, 2,4-dichloro-3-aminophenol, 2-chloro-3-amino-6-methylphenol, 2-methyl-4-chloro-5-aminophenol, N-cyclopentyl-metaaminophenol, 2-methyl-4-methoxy-5-(2-hydroxyethylamino)phenol, 2-methyl-4-fluoro-5-aminophenol, paraaminoorthocresol, resorcin, 2-methylresorcin, 4-chlororesorcin, 1-naphthol, 1,5-dihydroxynaphthalene, 1,7-dihydroxynaphthalene, 2,7-dihydroxynaphthalene, 2-isopropyl-5-methylphenol, 4-hydroxyindole, 5-hydroxyindole, 6-hydroxyindole, 7-hydroxyindole, 6-hydroxybenzomorpholine, 3,4-methylenedioxyphenol, 2-bromo-4,5-methylenedioxyphenol, 3,4-methylenedioxyaniline, 1-(2-hydroxyethyl)amino-3,4-methylenedioxybenzene, 2,6-dihydroxy-3,4-dimethylpyridine, 2,6-dimethoxy-3,5-diaminopyridine, 2,3-diamino-6-methoxypyridine, 2-methylamino-3-amino-6-methoxypyridine, 2-amino-3-hydroxypyridine, 2,6-diaminopyridine, salts of these substances, and mixtures thereof.

The content of each of the precursor and the coupler in the hair dye composition is preferably 0.01 mass% or more, more preferably 0.1 mass% or more, and preferably 10 mass% or less, more preferably 7.5 mass% or less, further more preferably 5 mass% or less.

When the hair dye composition contains an oxidizing dye, the hair dye composition further contains an alkali agent. Examples of the suitable alkali agent include, but are not limited to, ammonia and salts thereof; alkanolamines (monoethanolamine, isopropanolamine, 2-amino-2-methylpropanol, 2-aminobutanol and the like) and salts thereof; alkanediamines (1,3-propanediamine and the like) and salts thereof; carbonates (guanidine carbonate, sodium carbonate, potassium carbonate, sodium hydrogen carbonate, potassium hydrogen carbonate and the like); and mixtures thereof.

The content of the alkali agent in the hair dye composition is preferably 0.1 mass% or more, more preferably 0.5 mass% or more, further more preferably 1 mass% or more, and preferably 15 mass% or less, more preferably 10 mass% or less, further more preferably 7.5 mass% or less.

The composition containing an oxidizing agent (second part) when the hair dye composition contains an oxidizing dye is stored separately from the composition containing an oxidizing agent (first part), and mixed before naturally derived fibers are immersed. Examples of the suitable oxidizing agent include, but are not limited to, hydrogen peroxide, urea peroxide, melamine peroxide and sodium brominate. Among these oxidizing agents, hydrogen peroxide is preferable.

The content of the oxidizing agent in the hair dye composition is preferably 1 mass% or more, more preferably 2 mass% or more, and preferably 15 mass% or less, more preferably 12 mass% or less, further more preferably 9 mass% or less.

When the first part and the second part are stored separately, the pH of the second part at 25°C is preferably 2 or more, more preferably 2.5 or more, and preferably 6 or less, more preferably 4 or less. The pH can be adjusted by a suitable buffering agent. The pH of the hair dye composition obtained by mixing the first part and the second part at 25°C is preferably 6 or more, more preferably 6.5 or more, further more preferably 6.8 or more, and preferably 11 or less, more preferably 10.5 or less, further more preferably 10 or less.
When the hair dye composition contains an oxidizing dye, the hair dye composition may further contain any of the direct dyes exemplified above.
Preferably, the hair dye composition may further contain the following surfactant, conditioning component and the like. Preferably, the hair dye composition can be in the form of solution, emulsion, cream, paste and mousse.
The temperature of the hair dye composition is preferably 0°C or higher, more preferably 10°C or higher, further more preferably 20°C or higher, and preferably 90°C or lower, more preferably 80°C or lower, from the viewpoint of efficiently infiltrating and diffusing the hair dye composition into naturally derived fibers to enhance the effect of dyeing.

(Surface finish for imparting hydrophobicity and reducing friction)

The surface finish for imparting hydrophobicity and reducing friction is performed by immersing naturally derived fibers in the following surface finish agent after the step (i), (II-a) or (II-b).
The surface finish agent comprises the following component (F) and component (C).

(F) epoxyaminosilane copolymer which is a reaction product of the following compounds (a) to (d):

(a) polysiloxane having at least two oxiranyl groups or oxetanyl groups;
(b) polyether having at least two oxiranyl groups or oxetanyl groups;
(c) aminopropyltrialkoxysilane; and
(d) a compound selected from the group consisting of the following primary and secondary amines:

- primary amine: methylamine, ethylamine, propyleneamine, ethanolamine, isopropylamine, butylamine, isobutylamine, hexylamine, dodecylamine, oleylamine, aniline, aminopropyltrimethylsilane, aminopropyltriethylsilane, aminomorpholine, aminopropyldiethylamine, benzylamine, naphthylamine, 3-amino-9-ethylcarbazole, 1-aminoheptafluorohexane and 2,2,3,3,4,4,5,5,6,6,7,7,8,8,8-pentadecafluoro-1-octaneamine; and
- secondary amine: methylethylamine, methyloctadecylamine, diethanolamine, dibenzylamine, dihexylamine, dicyclohexylamine, piperidine, pyrrolidine, phthalimide and polymer amine.

(C) Water

[Component (F): epoxyaminosilane copolymer]

The epoxyaminosilane copolymer as the component (F) is a reaction product of the following compounds (a) to (d).

<Compounds (a) and (b)>

The compound (a) is a polysiloxane having at least two oxiranyl groups or oxetanyl groups, and examples thereof include compounds of the following formula (5):

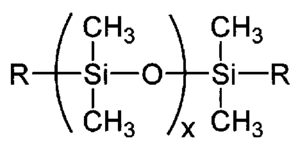

(5)

wherein R represents a hydrocarbon group having 1 to 6 carbon atoms and an oxiranyl group or an oxetanyl group at the terminal and optionally having a hetero atom, and x represents a number of 1 to 1 000.
The compound (b) is a polyether having at least two oxiranyl groups or oxetanyl groups, and examples thereof include compounds of the following formula (6):

$$R-(CH_2CH_2O)_y-(CH_2\underset{CH_3}{\underset{|}{C}}HO)_z-R \qquad (6)$$

wherein R represents the same meaning as described above, y is from 1 to 100, z is from 0 to 100, and y + z represents a number from 1 to 200.

In formulae (5) and (6), the hetero atom optionally contained in R is preferably an oxygen atom. Examples of R include an oxiranylmethyl group (glycidyl group), an oxiranylmethoxy group (glycidyloxy group), an oxiranylmethoxypropyl group (glycidyloxypropyl group), an oxetanylmethyl group, an oxetanylmethoxy group, an oxetanylmethoxypropyl group and a 3-ethyloxetanylmethyl group. Among them, hydrocarbon groups having 1 to 4 carbon atoms and an oxiranyl group and optionally having a hetero oxygen atom are preferable, and at least one selected from the group consisting of an oxiranylmethyl group (glycidyl group), an oxiranylmethoxy group (glycidyloxy group) and an oxetanylmethyl group, an oxiranylmethoxypropyl group (glycidyloxypropyl group) is more preferable.

<Compound (c)>

The compound (c) is aminopropyltrialkoxysilane. Examples of the alkoxy group in the compound (c) include alkoxy groups having 1 to 6 carbon atoms, preferably 2 to 4 carbon atoms, more preferably 3 carbon atoms, and among them, an isopropoxy group is preferable. Examples of the compound (c) include aminopropyltrimethoxysilane, aminopropyltriethoxysilane, aminopropyltripropoxysilane, aminopropyltriisopropoxysilane, aminopropyltributoxysilane, and aminopropyltri-tert-butoxysilane, and among them, aminopropyltriisopropoxysilane is preferable. Any one compound (c) may be used alone, or two or more types may be used in combination.

<Compound (d)>

The compound (d) is a compound selected from the group consisting of the following primary and secondary amines:

- primary amine: methylamine, ethylamine, propyleneamine, ethanolamine, isopropylamine, butylamine, isobutylamine, hexylamine, dodecylamine, oleylamine, aniline, aminopropyltrimethylsilane, aminopropyltriethylsilane, aminomorpholine, aminoethyldimethylamine, aminoethyldiethylamine, aminoethyldibutylamine, aminopropyldimethylamine, aminopropyldiethylamine, aminopropyldibutylamine, benzylamine, naphthylamine, 3-amino-9-ethylcarbazole, 1-aminoheptafluorohexane and 2,2,3,3,4,4,5,5,6,6,7,7,8,8,8-pentadecafluoro-1-octaneamine
- secondary amine: methylethylamine, methyloctadecylamine, diethanolamine, dibenzylamine, dihexylamine, dicyclohexylamine, piperidine, pyrrolidine, phthalimide and polymer amine.

Among them, primary amines are preferable, and one selected from the group consisting of aminopropyldiethylamine, aminopropyldimethylamine and aminopropyldibutylamine is more preferable. One compound (d) may be used alone, or two or more types may be used in combination.

The reactions of compounds (a) to (d) are carried out by, for example, refluxing the compounds in a solvent such as isopropanol for a certain time. Here, the molar ratio of oxiranyl groups or oxetanyl groups of compounds (a) and (b) to amino groups of the compound (c) is preferably 1 or more, more preferably 1.1 or more, further more preferably 1.2 or more, and preferably 4 or less, more preferably 3.9 or less, further more preferably 3.8 or less.

Examples of the component (F) include those having the INCI name of polysilicone-29, and examples of the commercially available product thereof include Silsoft CLX-E (containing an active ingredient at 15 mass%, dipropylene glycol and water) from Momentive Performance Materials Company.

The content of the component (F) in the surface finish agent is preferably 0.01 mass% or more, more preferably 0.05 mass% or more, further more preferably 0.10 mass% or more, further more preferably 0.20 mass% or more, from the viewpoint of imparting sufficient hydrophobicity to naturally derived fibers, and preferably 15.00 mass% or less, more preferably 10.00 mass% or less, further more preferably 8.00 mass% or less, further more preferably 6.00 mass% or less, from the viewpoint that a sticky feel is not given.

From the viewpoint of increasing the reaction rate of the trialkoxysilane part of the component (F) in an acidic region or a basic region, the pH of the surface finish agent at 25°C is preferably in the following range. When the surface finish agent is set as an acidic region, the pH is preferably 1.0 or more, more preferably 1.5 or more, further more preferably 2.0 or more, and preferably 5.0 or less, more preferably 4.0 or less, further more preferably 3.5 or less. When the surface finish agent is set as a basic region, the pH is preferably 7.0 or more, more preferably 7.5 or more, further more preferably 8.0 or more, and preferably 11 or less, more preferably 10.5 or less, further more preferably 10 or less. The surface finish agent may appropriately contain a pH adjuster for adjusting the pH of the surface finish agent to be

within the above-described range. As the pH adjuster, alkanol amines such as monoethanolamine, isopropanolamine, 2-amino-2-methylpropanol and 2-aminobutanol, or salts thereof; alkanediamines such as 1,3-propanediamine, or salts thereof; carbonates such as guanidine carbonate, sodium carbonate, potassium carbonate, sodium hydrogen carbonate and potassium hydrogen carbonate; hydroxides such as sodium hydroxide, potassium hydroxide; and the like can be used as the alkali agent. As the acid agent, inorganic acids such as hydrochloric acid and phosphoric acid, hydrochlorides such as monoethanolamine hydrochloride, phosphorates such as monopotassium dihydrogen phosphate and disodium monohydrogen phosphate, and organic acids such as lactic acid and malic acid, and the like can be used.

The amount of the surface finish agent in which naturally derived fibers are immersed is preferably 2 or more, more preferably 5 or more, further more preferably 10 or more, and preferably 100 or less, more preferably 50 or less, further more preferably 20 or less, in terms of bath ratio to the mass of the naturally derived fibers (mass of surface finish agent/mass of naturally derived fibers).

(Post-heating: heating treatment for further improving fiber stretchability (tenacity))

Further, from the viewpoint of more effectively improving the stretchability of naturally derived fibers, naturally derived fibers can be heated while being stretched by applying tension to the fibers. When the naturally derived fibers are small in amount, it is preferable to use a hair iron for the heating, and when the naturally derived fibers are large in amount, an equivalent result can be obtained by, for example, performing hot air heating while applying tension by a rewinder.

The fiber draw ratio during heating is preferably 0.1% or more, more preferably 0.2% or more, further more preferably 0.5% or more, from the viewpoint of more effectively improving the stretchability of the fibers, and preferably 10% or less, more preferably 5% or less, further more preferably 2% or less, from the viewpoint of suppressing damage to the fibers.

The heating temperature is preferably 120°C or higher, more preferably 140°C or higher, further more preferably 160°C or higher, from the viewpoint of more effectively improving the stretchability of the fibers, and preferably 240°C or lower, more preferably 220°C or lower, further more preferably 200°C or lower, from the viewpoint of suppressing damage to the fibers.

The heating time is preferably 1 second or more, more preferably 3 seconds or more, further more preferably 5 seconds or more, from the viewpoint of more effectively improving the stretchability of the fibers, and preferably 60 seconds or less, more preferably 30 seconds or less, further more preferably 20 seconds or less, from the viewpoint of suppressing damage to the fibers.

After heating, from the viewpoint of more effectively improving the stretchability of the fibers, naturally derived fibers can be left to stand in water while being stretched by applying tension to the fibers.

The draw ratio here is preferably 0.1% or more, more preferably 0.2% or more, further more 0.5% or more, from the viewpoint of more effectively improving the stretchability of the fibers, and preferably 10% or less, more preferably 5% or less, further more preferably 2% or less, from the viewpoint of suppressing damage to the fibers.

The water temperature is preferably 5°C or higher, more preferably 20°C or higher, further more preferably 30°C, from the viewpoint of more effectively improving the stretchability of the fibers, and preferably 80°C or lower, more preferably 60°C or lower, further more preferably 50°C or lower, from the viewpoint of suppressing damage to the fibers.

The time for leaving the fibers to stand in water is preferably 1 minute or more, more preferably 5 minutes or more, further more preferably 30 minutes or more, from the viewpoint of more effectively improving the stretchability of the fibers, and preferably 48 hours or less, more preferably 24 hours or less, further more preferably 3 hours or less, from the viewpoint of suppressing damage to the fibers.

By performing this process, depending on conditions for treatment in the steps (i) to (ii-a) or (ii-b), stretchability equivalent to that of human hair can be achieved during drying of the fibers.

(Suppression or elimination of coloring)

Further, for the purpose of suppressing or eliminating coloring in naturally derived fibers treated with the fiber-treating agent of the present invention, treatment can be performed with a composition containing the component (B). Examples of the preferred component (B) for this purpose include reducing salts (salts of thiol compounds and the like) and salts having a metal chelating action (sodium salts of edetic acid such as disodium ethylenediaminetetraacetate, sodium salts of etidronic acid such as disodium etidronate, and the like) for organic salts, and reducing salts (sulfurous acid salts such as sodium sulfite) for inorganic salts. In particular, it is more preferable that a reducing salt and a salt having a metal chelating action be used in combination.

Coloring of fibers which is caused by treatment with the fiber-treating agent of the present invention is considered to include both brownish coloring by oxidation (which can be countered by treatment with a reducing salt) and yellowish coloring by a catechin-metal complex (which can be countered by treatment with a chelating agent), and it may be

possible to more adequately suppress coloring of the fibers by performing bleaching treatment corresponding to each case.

The composition containing the component (B) is more preferably water-soluble. The pH of the composition is preferably 2.0 or more, more preferably 3.0 or more, further more preferably 4.0 or more, and preferably 9.0 or less, more preferably 7.0 or less, further more preferably 6.0 or less, from the viewpoint of preventing a decrease in strength of naturally derived fibers.

The content of the component (B) in the composition containing the component (B) is preferably 0.5 mass% or more, more preferably 1.0 mass% or more, further more preferably 2.0 mass% or more, from the viewpoint of exhibiting an effect of suppressing or eliminating coloring of naturally derived fibers, and preferably 20 mass% or less, more preferably 10 mass% or less, further more preferably 5.0 mass% or less, from the viewpoint of preventing a decrease in strength of naturally derived fibers by a reducing action.

The temperature for the treatment with the composition containing the component (B) is preferably 5°C or higher, more preferably 10°C or higher, further more preferably 20°C or higher, from the viewpoint of exhibiting an effect of suppressing or eliminating coloring of naturally derived fibers, and preferably 100°C or lower, more preferably 60°C or lower, further more preferably 40°C or lower, from the viewpoint of avoiding damage to fibers.

The time for the treatment with the composition containing the component (B) is preferably 1 second or more, more preferably 30 seconds or more, further more preferably 1 minute or more, from the viewpoint of exhibiting an effect of suppressing or eliminating coloring of naturally derived fibers, and preferably 60 minutes or less, more preferably 30 minutes or less, further more preferably 15 minutes or less, from the viewpoint of avoiding damage to fibers.

When naturally derived fibers are treated by the above method for treating fibers, the fibers contains the component (A), so that it is possible to produce fibers for hair ornament products in which a shape can be imparted by a heat set, the fibers are excellent in tensile elastic modulus, the stretchability (tenacity) of the naturally derived fibers is highly improved and the imparted performance can be gradually eliminated by washing, and it is also possible to produce a hair ornament product using the fibers.

In the present invention, examples of the hair ornament product include hair wigs, wigs, weavings, hair extensions, blade hairs, hair accessories, and doll hairs.

Concerning the embodiments described above, preferred aspects of the present invention will be further disclosed below.

<1> A fiber-treating agent comprising the following components (A) to (C) :

(A): a phenolic compound selected from the group consisting of the following components (a1) to (a5):

(a1) 2,3,3',4,4',5'-hexahydroxybenzophenone;
(a2) 5,5',6,6'-tetrahydroxy-3,3,3',3'-tetramethyl-1,1'-spirobiindan;
(a3) a resorcin derivative of formula (1):

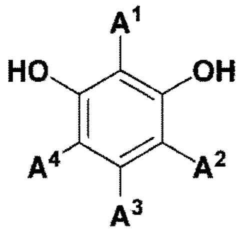

(1)

wherein
$A^1$ to $A^4$ are the same or different, and each represents a hydrogen atom, a hydroxy group, a halogen atom, a sulfonic acid group or a salt thereof, a linear or branched alkyl group or alkenyl group having 1 to 6 carbon atoms, or a linear or branched alkoxy group or alkenyloxy group having 1 to 6 carbon atoms;
(a4) a naphthol derivative of formula (2) or (3):

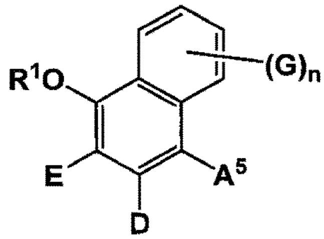

(2)

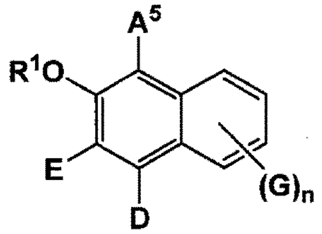

(3)

wherein

$R^1$ represents a hydrogen atom or a methyl group,
$A^5$ represents a hydrogen atom, a linear or branched alkyl group or alkenyl group having 1 to 12 carbon atoms, an optionally substituted aralkyl group or arylalkenyl group having 7 to 12 carbon atoms, a linear or branched alkoxy group or alkenyloxy group having 1 to 6 carbon atoms, a halogen atom or $-CO-R^2$ ($R^2$ is a linear or branched alkyl group or alkenyl group having 1 to 12 carbon atoms, an optionally substituted aralkyl group or arylalkenyl group having 7 to 12 carbon atoms, or an optionally substituted aromatic hydrocarbon group having 6 to 12 carbon atoms),
D represents a hydrogen atom, a hydroxy group, a methyl group, or a linear or branched alkoxy group or alkenyloxy group having 1 to 12 carbon atoms,
E represents a hydrogen atom, a hydroxy group, a linear or branched alkyl group or alkenyl group having 1 to 6 carbon atoms, or a linear or branched alkoxy group or alkenyloxy group having 1 to 6 carbon atoms, and
G represents a hydroxy group, a linear or branched alkyl group or alkenyl group having 1 to 6 carbon atoms, or an alkoxy group having 1 to 6 carbon atoms, and n represents an integer of 0 to 2; and

(a5) a flavan-3-ol derivative of formula (4):

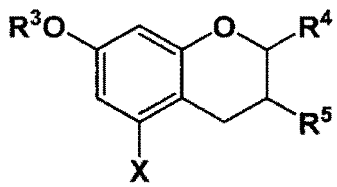

(4)

wherein

$R^3$ represents a hydrogen atom or a methyl group,
X represents a hydrogen atom, a hydroxy group or a methoxy group,
$R^4$ represents an aromatic hydrocarbon group optionally substituted with up to 3 hydroxy groups or methoxy groups and optionally forming a fused ring with 1,3-dioxolane, and
$R^5$ represents a hydroxy group, a methoxy group, an aromatic hydrocarbon group optionally substituted with up to 3 hydroxy groups or methoxy groups and optionally forming a fused ring with 1,3-dioxolane, or an arylcarbonyloxy group or aralkylcarbonyloxy group optionally substituted with up to 3 hydroxy groups or methoxy groups;

(B): a salt; and
(C): water.

<2> The fiber-treating agent according to <1>, wherein the component (a3) is preferably one or more selected from the group consisting of resorcin, 2-methylresorcin, 4-chlororesorcin and pyrogallol.

<3> The fiber-treating agent according to <1> or <2>, wherein the component (a4) is preferably one or more selected from the group consisting of 1-naphthol, 2-naphthol, 3-methylnaphthalen-1-ol, naphthalene-1-,5-diol and naphthalene-1,8-diol.

<4> The fiber-treating agent according to any one of <1> to <3>, wherein the component (a5) is preferably one or more selected from the group consisting of catechin, epicatechin, epigallocatechin, gallocatechin, catechin gallate, epicatechin gallate, gallocatechin gallate, epigallocatechin gallate and a tea extract.

<5> The fiber-treating agent according to any one of <1> to <4>, wherein the component (A) is preferably a phenolic compound selected from the group consisting of the components (a3) to (a5).

<6> The fiber-treating agent according to <5>, wherein the component (A) is preferably one or more selected from the group consisting of resorcin, catechin, epicatechin, gallocatechin, epigallocatechin, catechin gallate, epicatechin gallate, gallocatechin gallate, epigallocatechin gallate and a tea extract.

<7> The fiber-treating agent according to any one of <1> to <6>, wherein a content of the component (A) in the fiber-treating agent is preferably 0.1 mass% or more, more preferably 1 mass% or more, further more preferably 2.5 mass% or more, even more preferably 5 mass% or more, and preferably 80 mass% or less, more preferably 60 mass% or less, further more preferably 50 mass% or less, even more preferably 40 mass% or less, even more preferably 35 mass% or less, even more preferably 30 mass% or less.

<8> The fiber-treating agent according to any one of <1> to <7>, wherein the component (B) is preferably free of a glyoxylic acid salt.

<9> The fiber-treating agent according to any one of <1> to <8>, wherein the component (B) is preferably one or more selected from the group consisting of sodium citrate, sodium lactate, disodium etidronate, disodium ethylenediaminetetraacetate, disodium catechol-3,5-disulfonate monohydrate, sodium phytate, sodium mercaptoethanesulfonate, sodium 2-naphthalenesulfonate, sodium sulfite, sodium chloride and aluminum chlorohydroxy.

<10> The fiber-treating agent according to any one of <1> to <9>, wherein the component (B) is preferably one or more salts of organic acids or inorganic acids selected from the group consisting of sodium citrate, sodium lactate, disodium etidronate, disodium ethylenediaminetetraacetate, disodium catechol-3,5-disulfonate monohydrate, sodium phytate, sodium 2-naphthalenesulfonate, sodium chloride and aluminum chlorohydroxy, which have a low reduction action; more preferably one or more salts of organic acids selected from the group consisting of sodium citrate, sodium lactate, disodium etidronate, disodium ethylenediaminetetraacetate, disodium catechol-3,5-disulfonate monohydrate, sodium phytate and sodium 2-naphthalenesulfonate, which have a low reduction action; further more preferably one or more organic salts selected from the group consisting of sodium citrate, sodium lactate, disodium etidronate, disodium ethylenediaminetetraacetate, disodium catechol-3,5-disulfonate monohydrate and sodium phytate, which have a low reduction action and which have a chelating action or in which a total number of hydroxy groups, carboxy groups and phosphoric acid groups is 2 or more.

<11> The fiber-treating agent according to any one of <1> to <10>, wherein a content of the component (B) in the fiber-treating agent is preferably 0.01 mass% or more, more preferably 0.1 mass% or more, further more preferably 1 mass% or more, even more preferably 2 mass% or more, even more preferably 3 mass% or more, and preferably 25 mass% or less, more preferably 20 mass% or less, further more preferably 15 mass% or less, even more preferably 10 mass% or less.

<12> The fiber-treating agent according to any one of <1> to <11>, wherein the component (B) is an organic salt having a chelating action, and the content of the component (B) in the fiber-treating agent is preferably 0.01 mass% or more, more preferably 0.05 mass% or more, further more preferably 0.10 mass% or more, and preferably 10 mass% or less, more preferably 5.0 mass% or less, further more preferably 2.5 mass% or less.

<13> The fiber-treating agent according to any one of <1> to <12>, wherein a molar ratio of the component (B) to the component (A), (B)/(A), is preferably 0.01 or more, more preferably 0.05 or more, further more preferably 0.10 or more, even more preferably 0.30 or more, even more preferably 0.50 or more, and preferably less than 20, more preferably 10 or less, further more preferably 5 or less, even more preferably 3 or less.

<14> The fiber-treating agent according to any one of <1> to <13>, wherein a content of the component (C) in the fiber-treating agent is preferably 10 mass% or more, more preferably 20 mass% or more, further more preferably 30 mass% or more, even more preferably 40 mass% or more, and preferably 99 mass% or less, more preferably 98 mass% or less, further more preferably 97 mass% or less, even more preferably 95 mass% or less.

<15> The fiber-treating agent according to any one of <1> to <14>, further comprising preferably a cationic surfactant, more preferably a long chain monoalkyl quaternary ammonium salt having one alkyl group having 8 to 24 carbon atoms and three alkyl groups having 1 to 4 carbon atoms, further more preferably a cationic surfactant selected from the group consisting of cetyltrimethylammonium chloride, myristyltrimethylammonium chloride, behentrimonium chloride, cetyltrimethylammonium bromide and stearamidopropyltrimonium chloride.

<16> The fiber-treating agent according to <15>, wherein a content of the cationic surfactant in the fiber-treating

agent is preferably 0.05 mass% or more, more preferably 0.1 mass% or more, and preferably 10 mass% or less, more preferably 5 mass% or less.

<17> The fiber-treating agent according to any one of <1> to <16>, further comprising preferably silicone, more preferably one or more selected from the group consisting of dimethylpolysiloxane and amino acid-modified silicone.

<18> The fiber-treating agent according to <17>, wherein a content of silicone in the fiber-treating agent is preferably 0.1 mass% or more, more preferably 0.2 mass% or more, further more preferably 0.5 mass% or more, and preferably 20 mass% or less, more preferably 10 mass% or less, further more preferably 5 mass% or less.

<19> The fiber-treating agent according to any one of <1> to <18>, further comprising preferably a cationic polymer, more preferably one or more selected from the group consisting of a cationized cellulose derivative, cationized starch, a cationized guar gum derivative, a polymer or copolymer of a diallyl quaternary ammonium salt, and a quaternized polyvinylpyrrolidone derivative, further more preferably one or more selected from the group consisting of a polymer containing a diallyl quaternary ammonium salt as a constituent unit, a quaternized polyvinylpyrrolidone derivative, and a cationized cellulose derivative, further more preferably a polymer or copolymer of a diallyl quaternary ammonium salt, and a cationized cellulose derivative.

<20> The fiber-treating agent according to <19>, wherein a content of the cationic polymer in the fiber-treating agent is preferably 0.001 mass% or more, more preferably 0.01 mass% or more, further more preferably 0.05 mass% or more, and preferably 20 mass% or less, more preferably 10 mass% or less.

<21> The fiber-treating agent according to any one of <1> to <20>, wherein a pH at 25°C is preferably 3.0 or more, more preferably 3.5 or more, further more preferably 4.0 or more, and preferably 11.0 or less, more preferably 9.0 or less, further more preferably 7.0 or less.

<22> A method for treating fibers, comprising the following step (i):

step (i) immersing naturally derived fibers in the fiber-treating agent according to any one of <1> to <21>.

<23> The method for treating fibers according to <22>, wherein an amount of the fiber-treating agent in which the naturally derived fibers are immersed in the step (i) is preferably 2 or more, more preferably 3 or more, further more preferably 5 or more, even more preferably 10 or more, even more preferably 20 or more, and preferably 500 or less, more preferably 250 or less, further more preferably 100 or less, in terms of bath ratio to a mass of the naturally derived fibers (mass of fiber-treating agent/mass of naturally derived fibers).

<24> The method for treating fibers according to <22> or <23>, wherein a temperature of the fiber-treating agent in the step (i) is 20°C or higher, more preferably 35°C or higher, further more preferably 45°C or higher, and preferably lower than 100°C, more preferably 80°C or lower, further more preferably 70°C or lower, further more preferably 60°C or less.

<25> The method for treating fibers according to any one of <22> to <24>, wherein an immersion time in the step (i) is preferably 15 minutes or more, more preferably 30 minutes or more, further more preferably 1 hour or more, and preferably 48 hours or less, more preferably 24 hours or less, further more preferably 12 hours or less.

<26> The method for treating fibers according to any one of <22> to <25>, wherein preferably, the following step (ii-a) is carried out after the step (i):

step (ii-a) immersing fibers in a post-crosslinking agent (I) containing components (D) and (C):

(D): at least one formaldehyde derivative selected from the group consisting of formaldehyde, a hydrate of formaldehyde, glyoxylic acid, a hydrate of glyoxylic acid, a glyoxylic acid salt, glyoxal, a hydrate of glyoxal, glutaraldehyde, and a hydrate of glutaraldehyde; and

(C): water.

<27> The method for treating fibers according to <26>, wherein a content of the component (D) in the post-crosslinking agent (I) is preferably 0.01 mass% or more, more preferably 0.1 mass% or more, further more preferably 1 mass% or more, and preferably 60 mass% or less, more preferably 40 mass%, further more preferably 20 mass% or less.

<28> The method for treating fibers according to any one of <22> to <25>, wherein the following step (ii-b) is carried out after the step (i):

step (ii-b) immersing fibers in a post-crosslinking agent containing components (E) and (C):

(E): a compound having a structure in which a methylol group is bonded to each of two nitrogen atoms in the molecule; and

(C): water.

<29> The method for treating fibers according to <28>, wherein the component (E) is preferably any of compounds (E1) to (E4) shown below, more preferably any of the compounds (E3) and (E4), further more preferably the compound (E3).

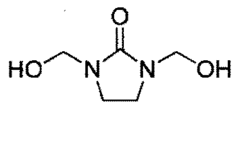
(E1)

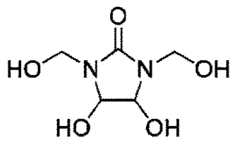
(E2)

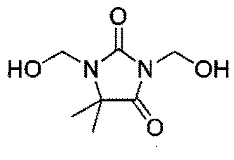
(E3)

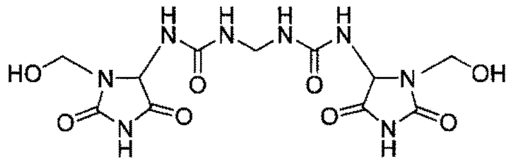
(E4)

<30> The method for treating fibers according to <28> or <29>, wherein a content of the component (E) in the post-crosslinking agent (II) is preferably 0.1 mass% or more, more preferably 1 mass% or more, further more preferably 2.5 mass% or more, even more preferably 5 mass% or more, even more preferably 10 mass% or more, and preferably 80 mass% or less, more preferably 70 mass% or less, further more preferably 60 mass% or less, even more preferably 50 mass% or less, even more preferably 40 mass% or less.
<31> The method for treating fibers according to any one of <26> to <30>, wherein a pH of the post-crosslinking agent is preferably 11.0 or less, more preferably 10.0 or less, further more preferably 9.0 or less, and preferably 2.0 or more, more preferably 3.0 or more, further more preferably 4.0 or more.
<32> The method for treating fibers according to any one of <26> to <31>, wherein an amount of the post-crosslinking agent in which naturally derived fibers are immersed in the step (ii-a) or (ii-b) is preferably 2 or more, more preferably 3 or more, further more preferably 5 or more, even more preferably 10 or more, even more preferably 20 or more, and preferably 500 or less, more preferably 250 or less, further more preferably 100 or less, in terms of a bath ratio to a mass of naturally derived fibers (mass of post-crosslinking agent/mass of fibers treated in step (i)).
<33> The method for treating fibers according to any one of <26> to <32>, wherein a time for immersion of naturally derived fibers in the post-crosslinking agent in the step (ii-a) or (ii-b) is preferably 1 minute or more, more preferably 3 minutes or more, further more preferably 5 minutes or more, and preferably 5 hours or less, more preferably 3 hours or less, further more preferably 1 hour or less.
<34> The method for treating fibers according to any one of <26> to <33>, wherein preferably, the step of immersing the fibers in a surface finish agent containing the following components (F) and (C) is further carried out after the step (i), step (ii-a) or step (ii-b).

(F) an epoxyaminosilane copolymer which is a reaction product of the following compounds (a) to (d):

(a) polysiloxane having at least two oxiranyl groups or oxetanyl groups;
(b) polyether having at least two oxiranyl groups or oxetanyl groups;
(c) aminopropyltrialkoxysilane; and
(d) a compound selected from the group consisting of the following primary and secondary amines:

- primary amine: methylamine, ethylamine, propyleneamine, ethanolamine, isopropylamine, butylamine, isobutylamine, hexylamine, dodecylamine, oleylamine, aniline, aminopropyltrimethylsilane, aminopropyltriethylsilane, aminomorpholine, aminopropyldiethylamine, benzylamine, naphthylamine, 3-amino-9-ethylcarbazole, 1-aminoheptafluorohexane and 2,2,3,3,4,4,5,5,6,6,7,7,8,8,8-pentadecafluoro-1-octaneamine; and
- secondary amine: methylethylamine, methyloctadecylamine, diethanolamine, dibenzylamine, dihexylamine, dicyclohexylamine, piperidine, pyrrolidine, phthalimide and polymer amine.

(C) water.

<35>The method for treating fibers according to <34>, wherein preferably, the component (F) is polysilicone-29.
<36> The method for treating fibers according to <34> or <35>, wherein a content of the component (F) in the surface finish agent is preferably 0.01 mass% or more, more preferably 0.05 mass% or more, further more preferably 0.10 mass% or more, further more preferably 0.20 mass% or more, and preferably 15.00 mass% or less, more

preferably 10.00 mass% or less, further more preferably 8.00 mass% or less, further more preferably 6.00 mass% or less.

<37> The method for treating fibers according to any one of <34> to <36>, wherein a pH of the surface finish agent at 25°C is preferably 1.0 or more, more preferably 1.5 or more, further more preferably 2.0 or more, and preferably 5.0 or less, more preferably 4.0 or less, further more preferably 3.5 or less.

<38> The method for treating fibers according to any one of <34> to <36>, wherein the pH of the surface finish agent at 25°C is preferably 7.0 or more, more preferably 7.5 or more, further more preferably 8.0 or more, and preferably 11 or less, more preferably 10.5 or less, further more preferably 10 or less.

<39> The method for treating fibers according to any one of <34> to <38>, wherein an amount of the surface finish agent in which naturally derived fibers are immersed is preferably 2 or more, more preferably 5 or more, further more preferably 10 or more, and preferably 100 or less, more preferably 50 or less, further more preferably 20 or less, in terms of a bath ratio to a mass of naturally derived fibers (mass of surface finish agent/mass of naturally derived fibers).

<40> A method for producing fibers for hair ornament products, comprising the step of treating fibers by the method for treating fibers according to any one of <22> to <39>.

<41> A method for producing a hair ornament product, comprising the step of treating fibers by the method for treating fibers according to any one of <22> to <39>.

<42> A fiber for hair ornament products, comprising the following component (A):

(A): a phenolic compound selected from the group consisting of the following components (a1) to (a5):

(a1) 2,3,3',4,4',5'-hexahydroxybenzophenone;

(a2) 5,5',6,6'-tetrahydroxy-3,3,3',3'-tetramethyl-1,1'-spirobiindan;

(a3) a resorcin derivative of formula (1):

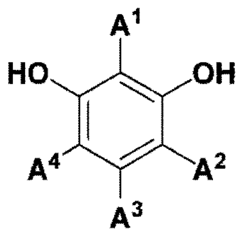

(1)

wherein

$A^1$ to $A^4$ are the same or different, and each represents a hydrogen atom, a hydroxy group, a halogen atom, a sulfonic acid group or a salt thereof, a linear or branched alkyl group or alkenyl group having 1 to 6 carbon atoms, or a linear or branched alkoxy group or alkenyloxy group having 1 to 6 carbon atoms;

(a4) a naphthol derivative of formula (2) or (3):

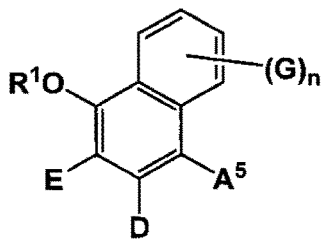

(2)

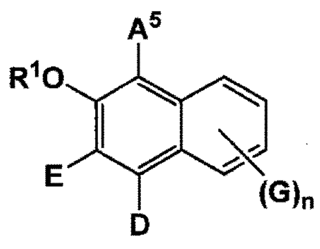

(3)

wherein

$R^1$ represents a hydrogen atom or a methyl group,
$A^5$ represents a hydrogen atom, a linear or branched alkyl group or alkenyl group having 1 to 12 carbon atoms, an optionally substituted aralkyl group or arylalkenyl group having 7 to 12 carbon atoms, a linear or branched alkoxy group or alkenyloxy group having 1 to 6 carbon atoms, a halogen atom or $-CO-R^2$ ($R^2$ is a linear or branched alkyl group or alkenyl group having 1 to 12 carbon atoms, an optionally substituted aralkyl group or arylalkenyl group having 7 to 12 carbon atoms, or an optionally substituted aromatic hydrocarbon group having 6 to 12 carbon atoms),
D represents a hydrogen atom, a hydroxy group, a methyl group, or a linear or branched alkoxy group or alkenyloxy group having 1 to 12 carbon atoms,
E represents a hydrogen atom, a hydroxy group, a linear or branched alkyl group or alkenyl group having 1 to 6 carbon atoms, or a linear or branched alkoxy group or alkenyloxy group having 1 to 6 carbon atoms, and
G represents a hydroxy group, a linear or branched alkyl group or alkenyl group having 1 to 6 carbon atoms, or an alkoxy group having 1 to 6 carbon atoms, and n represents an integer of 0 to 2; and

(a5) a flavan-3-ol derivative of formula (4):

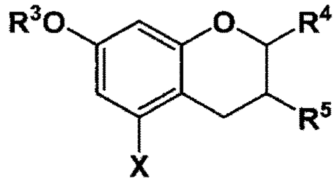

(4)

wherein

$R^3$ represents a hydrogen atom or a methyl group,
X represents a hydrogen atom, a hydroxy group or a methoxy group,
$R^4$ represents an aromatic hydrocarbon group optionally substituted with up to 3 hydroxy groups or methoxy groups and optionally forming a fused ring with 1,3-dioxolane, and
$R^5$ represents a hydroxy group, a methoxy group, an aromatic hydrocarbon group optionally substituted with up to 3 hydroxy groups or methoxy groups and optionally forming a fused ring with 1,3-dioxolane, or an arylcarbonyloxy group or aralkylcarbonyloxy group optionally substituted with up to 3 hydroxy groups or methoxy groups.

<43> The fiber for hair ornament products according to <42>, wherein preferably, the component (A) is a phenolic compound selected from the group consisting of the components (a3) to (a5).
<44> A hair ornament product having, as a constituent element, fibers comprising the following component (A):
(A): a phenolic compound selected from the group consisting of the following components (a1) to (a5):

(a1) 2,3,3',4,4', 5'-hexahydroxybenzophenone;
(a2) 5,5',6,6'-tetrahydroxy-3,3,3',3'-tetramethyl-1,1'-spirobiindan;
(a3) a resorcin derivative of formula (1):

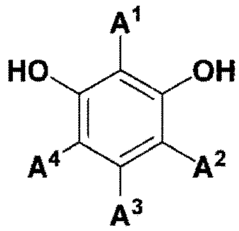

(1)

wherein
$A^1$ to $A^4$ are the same or different, and each represents a hydrogen atom, a hydroxy group, a halogen atom, a sulfonic acid group or a salt thereof, a linear or branched alkyl group or alkenyl group having 1 to 6 carbon atoms, or a linear or branched alkoxy group or alkenyloxy group having 1 to 6 carbon atoms;
(a4) a naphthol derivative of formula (2) or (3):

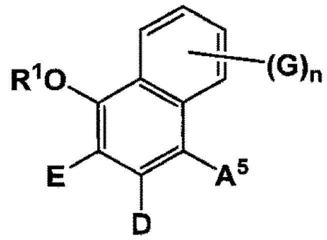

(2)

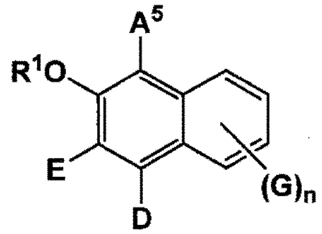

(3)

wherein

$R^1$ represents a hydrogen atom or a methyl group,
$A^5$ represents a hydrogen atom, a linear or branched alkyl group or alkenyl group having 1 to 12 carbon atoms, an optionally substituted aralkyl group or arylalkenyl group having 7 to 12 carbon atoms, a linear or branched alkoxy group or alkenyloxy group having 1 to 6 carbon atoms, a halogen atom or $-CO-R^2$ ($R^2$ is a linear or branched alkyl group or alkenyl group having 1 to 12 carbon atoms, an optionally substituted aralkyl group or arylalkenyl group having 7 to 12 carbon atoms, or an optionally substituted aromatic hydrocarbon group having 6 to 12 carbon atoms),
D represents a hydrogen atom, a hydroxy group, a methyl group, or a linear or branched alkoxy group or alkenyloxy group having 1 to 12 carbon atoms,
E represents a hydrogen atom, a hydroxy group, a linear or branched alkyl group or alkenyl group having 1 to 6 carbon atoms, or a linear or branched alkoxy group or alkenyloxy group having 1 to 6 carbon atoms, and
G represents a hydroxy group, a linear or branched alkyl group or alkenyl group having 1 to 6 carbon atoms, or an alkoxy group having 1 to 6 carbon atoms, and n represents an integer of 0 to 2; and

(a5) a flavan-3-ol derivative of formula (4):

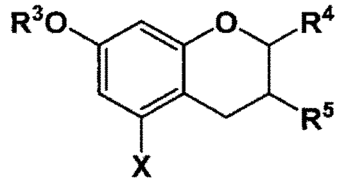

(4)

wherein

$R^3$ represents a hydrogen atom or a methyl group,
X represents a hydrogen atom, a hydroxy group or a methoxy group,
$R^4$ represents an aromatic hydrocarbon group optionally substituted with up to 3 hydroxy groups or methoxy groups and optionally forming a fused ring with 1,3-dioxolane, and
$R^5$ represents a hydroxy group, a methoxy group, an aromatic hydrocarbon group optionally substituted with up to 3 hydroxy groups or methoxy groups and optionally forming a fused ring with 1,3-dioxolane, or an arylcarbonyloxy group or aralkylcarbonyloxy group optionally substituted with up to 3 hydroxy groups or methoxy groups.

<45> The hair ornament product according to <44>, wherein the component (A) is a phenolic compound selected from the group consisting of the components (a3) to (a5).

Examples

Examples 1 to 5 and Comparative Examples 1 and 2

Using compositions whose formulations are shown in Table 1, regenerated collagen fibers were treated by the following method, and various properties were evaluated. The pH of each composition was measured with the prepared composition directly applied to a pH meter (F-52 manufactured by HORIBA, Ltd.) at room temperature (25°C).

<Treatment method>

1. A 22 cm-long tress with 0.50 g of regenerated collagen fibers (*) was immersed in a container containing 40 g of the fiber-treating agent, the opening of the container was closed, the container was immersed together with its contents in a water bath (manufacturer: TOYO SEISAKUSHO, Ltd./Model: TBS221FA) at 50°C, and heating was performed for 18 hours.
*: Regenerated collagen fibers manufactured by Kaneka Corporation were purchased in the form of a commercially available extension product, and cut, and the cut fibers were segmented into tresses, and used for evaluation. In this evaluation, extension products were used which display the use of Ultima 100% as a fiber species, and are brown with a color number of 3, and straight in shape.
2. The container containing the tress was taken out from the water bath, and brought back to room temperature.
3. The tress was taken out from the container, rinsed with running tap water at 30°C for 30 seconds, lathered with evaluating shampoo for 60 seconds, rinsed with running tap water at 30°C for 30 seconds, and lightly drained with a towel, and the tress was then blow-dried by a hot air dryer (Nobby White NB 3 000 manufactured by TESCOM Company) while being combed. The weight of the tress was measured ($W_1$).

<Formulation of evaluating shampoo>

| Component | (mass%) |
|---|---|
| sodium laureth sulfate | 15.5 |
| lauramide DEA | 1.5 |
| sodium benzoate | 0.5 |
| EDTA-2Na | 0.3 |
| phosphoric acid | amount required to adjust pH to 7 |
| ion-exchange water | balance |
| total | 100 |

<Ease of removal by washing>

1. Subsequent to the treatment, the tress was immersed in a container containing 40 g of ion-exchange water, the opening of the container was closed, the container was immersed together with its contents in a water bath (manufacturer: TOYO SEISAKUSHO, Ltd./Model: TBS221FA) at 50°C, and heating was performed for 18 hours.
2. The container containing the tress was taken out from the water bath, and brought back to room temperature.
3. The tress was taken out from the container, rinsed with running tap water at 30°C for 30 seconds, lathered with evaluating shampoo for 60 seconds, rinsed with running tap water at 30°C for 30 seconds, and lightly drained with a towel, and the tress was then blown by a hot air dryer (Nobby White NB 3 000 manufactured by TESCOM Company) while being combed. The weight of the tress was measured ($W_2$).

The ratio of removal of sorbed components by washing, R, was defined as follows, and evaluation was performed on a three-point scale of A to C by the ratio of removal.

$$R = [(W_1 - W_2) / (W_1 - 0.50) \times 100 [\%]$$

$W_1$ - 0.50: showing how many grams of components in the fiber-treating agent were sorbed in fibers.
$W_1$ - $W_2$: showing how many grams of components sorbed in fibers were removed.
R: showing "what percent" of components sorbed in fibers was removed.

Further, improvement of ease of removal by adding the component (B) was evaluated on the basis of the following criteria.

A: 45 < R The ease of removal was significantly improved.
B: 40 < R ≤ 45 The ease of removal was improved.
C: R < 40 The ease of removal did not change or decreased (lower than treatment with component (A) alone (=Comparative Example 2)).

<Increase in breaking elongation during fiber tensioning>

As an index of stretchability (tenacity) during fiber tensioning, an average breaking elongation, that is, an average value in evaluation on a plurality of fibers for the percentage by which the fiber was stretched by tensioning with respect to the original fiber length when rupture occurred was used. The evaluation was performed in the following procedure using a tress immediately after treatment performed as described in <Treatment method> above.

1. Ten fibers were cut from the root of the tress. A 3 cm fiber fragment was taken from near the center between the root and the hair tip of each fiber, so that a total of ten 3 cm hair fragments were obtained.
2. The fiber fragment was set in "MTT690 Miniature Tensile Tester" manufactured by DIA-STRON Limited, automatic measurement was started, and an average breaking elongation was determined when the fiber was in a wet. A large numerical value indicates that the fiber has high stretchability, and is excellent in tenacity and excellent in durability.

The degree of increase with respect to a breaking elongation (18.20%) during fiber tensioning in an untreated state, that is, in an intact state at the time of being cut from the commercially available product is shown as "ratio of increase in breaking elongation during fiber tensioning [%]" in the table.

That is, the degree of increase (C (%)) with respect to an intact state (untreated) at the time of being cut from the commercially available product when the breaking elongation in the untreated state is used as a reference (A%) and the breaking elongation of the tress immediately after treatment is defined as B% is shown as "ratio of increase in breaking elongation during fiber tensioning [%]" in the table.

$$C (\%) = B (\%) - A (\%)$$

<Increase in breaking load during fiber tensioning>

Evaluation of the breaking load during fiber tensioning was performed using a tress immediately after treatment performed as described in <Treatment method> above. As a numerical value, an average value in evaluation on a plurality of fibers was used. The evaluation was performed in the following procedure.

1. Ten fibers were cut from the root of the tress. A 3 cm fiber fragment was taken from near the center between the root and the hair tip of each fiber, so that a total of ten 3 cm hair fragments were obtained.
2. The fiber fragment was set in "MTT690 Miniature Tensile Tester" manufactured by DIA-STRON Limited, automatic measurement was started, and a load at rupture was determined when the fiber stretched in a wet state. A large numerical value indicates that the fiber has suppleness and resilience, and is insusceptible to stretching by an external force, and excellent in durability.

The degree of increase with respect to a load at rupture (70.79 gf) during fiber tensioning in an untreated state, that is, in an intact state at the time of being cut from the commercially available product is shown as "amount of increase in breaking load during fiber tensioning [gf]" in the table.

<Surface feel quality>

For evaluation of the feel, five skilled panelists performed evaluation on the basis of the following criteria for feel smoothness when the tress immediately after treatment in <Treatment method> was touched by hand, and a total value for the five panelists was taken as an evaluation result.

(Evaluation Criteria)

5: Much smoother hand feel over untreated fibers.

4: Smoother hand feel over untreated fibers.

3: Slightly smoother hand feel over untreated fibers.

2: Comparable in hand feel to untreated fibers.

1: Rougher, more frictional and poorer in hand feel than untreated fibers.

[Table 1]

| | | | Example | | | | | Comparative Example | |
|---|---|---|---|---|---|---|---|---|---|
| | | | 1 | 2 | 3 | 4 | 5 | 1 | 2 |
| Treati ng agent (mass %) | (A) | Tea extract (*1) | 11.3 | 11.3 | 11.3 | 11.3 | 11.3 | - | 11.3 |
| | (B) | Sodium sulfite | 5.0 | - | - | - | - | - | - |
| | | Sodium mercaptoethanesulfonate | - | 5.0 | - | - | - | - | - |
| | | Aluminum chlorohydroxy | - | - | 5.0 | - | - | - | - |
| | | Sodium 2-naphthalenesulfonate | - | - | - | 5.0 | - | - | - |
| | | Sodium chloride | - | - | - | - | 5.0 | - | - |
| | (C) | Water | Balance | Balance | Balance | Balance | Balance | - | Balance |
| | pH adjuster | Hydrochloric acid or sodium hydroxide | *2 | *2 | *2 | *2 | *2 | - | *2 |
| | Total | | 100 | 100 | 100 | 100 | 100 | - | 100 |
| | pH(25°C) | | 4.0 | 4.0 | 4.0 | 4.0 | 4.0 | - | 4.0 |
| | Bath ratio (mass ratio of treating agent to fiber) | | 80 | 80 | 80 | 80 | 80 | - | 80 |
| Effect | Ease of removal | Ratio of removal by washing R [%] | 46.7 | 42.0 | 40.1 | 43.6 | 46.5 | - | 40.0 |
| | | Evaluation of ease of removal by washing (A to C) | A | B | B | B | A | - | (reference) |
| | Durability improvement | Amount of increase in breaking elongation during fiber tensioning [%] | 2.9 | 1.9 | 2.8 | 3.3 | 3.3 | (reference) | 3.6 |
| | | Amount of increase in breaking load during fiber tensioning [gf] | 38.4 | 28.8 | 26.0 | 29.1 | 34.3 | (reference) | 35.6 |
| | Surface feel quality | | 20 | 20 | 20 | 20 | 20 | 10 | 15 |

*1: Total active amount of catechins in tea extract (analyzed by HPLC in accordance with Mizukami et al. (2007) J. Agric. Food Chem. 55: 4957-4964)
*2: Amount of pH adjustment

Examples 6 to 8

Using the compositions whose formulations are shown in Table 2, regenerated collagen fibers were treated in the same manner as in Examples 1 to 5, and the "ease of removal by washing" and the "surface feel quality" were evaluated.

[Table 2]

| | | | Example | | |
|---|---|---|---|---|---|
| | | | 6 | 7 | 8 |
| Treating agent (mass%) | (A) | Tea extract (*1) | 11.3 | 11.3 | 11.3 |
| | (B) | Disodium ethylenediaminetetraacetate | 5.0 | - | - |
| | | Sodium citrate | - | 5.0 | - |
| | | Sodium lactate | - | - | 5.0 |
| | (C) | Water | Balance | Balance | Balance |
| | pH adjuster | Hydrochloric acid or sodium hydroxide | *2 | *2 | *2 |
| | Total | | 100 | 100 | 100 |
| | pH(25°C) | | 4.0 | 4.0 | 4.0 |
| | Bath ratio (mass ratio of treating agent to fiber) | | 80 | 80 | 80 |
| Effect | Ease of removal | Ratio of removal by washing R [%] | 81.0 | 71.7 | 86.8 |
| | | Evaluation of ease of removal by washing (A to C) | A | A | A |
| | Surface feel quality | | 20 | 19 | 19 |

*1: Total active amount of catechins in tea extract (analyzed by HPLC in accordance with Mizukami et al. (2007) J. Agric. Food Chem. 55: 4957-4964)
*2: Amount of pH adjustment

Formulation Examples

The same effects as described above are obtained by immersing fibers (regenerated collagen fibers) in the fiber-treating agents shown as Formulation Examples in Table 3 below.

[Table 3]

| | | | Formulation Example | | | | | |
|---|---|---|---|---|---|---|---|---|
| | | | 1 | 2 | 3 | 4 | 5 | 6 |
| Treating agent (mass%) | (A) | Tea extract (*1) | 11.3 | 11.3 | 11.3 | 11.3 | 11.3 | 11.3 |
| | (B) | Disodium ethydronate | 1.0 | - | - | 0.1 | - | - |
| | | Disodium ethylenediaminetetraacetate | - | 1.0 | - | - | 0.1 | - |
| | | Disodium catechol-3,5-disulfonate monohydrate | - | - | 1.0 | - | - | 0.1 |
| | (C) | Water | Balance | Balance | Balance | Balance | Balance | Balance |
| | pH adjuster | Hydrochloric acid or sodium hydroxide | *2 | *2 | *2 | *2 | *2 | *2 |
| | Total | | 100 | 100 | 100 | 100 | 100 | 100 |
| pH(25°C) | | | 4.0 | 4.0 | 4.0 | 4.0 | 4.0 | 4.0 |
| Bath ratio (mass ratio of treating agent to fiber) | | | 80 | 80 | 80 | 80 | 80 | 80 |

*1: Total active amount of catechins in tea extract (analyzed by HPLC in accordance with Mizukami et al. (2007) J. Agric. Food Chem. 55: 4957-4964)
*2: Amount of pH adjustment

The tresses treated in Examples above can all be directly used as extensions by attachment to head hair with pins or the like, and can exhibit sufficient performance on the human head.

## Claims

1. A fiber-treating agent comprising the following components (A) to (C) :

(A): a phenolic compound selected from the group consisting of the following components (a1) to (a5):

(a1) 2,3,3',4,4',5'-hexahydroxybenzophenone;
(a2) 5,5',6,6'-tetrahydroxy-3,3,3',3'-tetramethyl-1,1'-spirobiindan;
(a3) a resorcin derivative of formula (1):

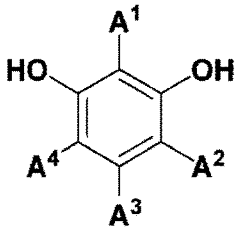
(1)

wherein
$A^1$ to $A^4$ are the same or different, and each represents a hydrogen atom, a hydroxy group, a halogen atom, a sulfonic acid group or a salt thereof, a linear or branched alkyl group or alkenyl group having 1 to 6 carbon atoms, or a linear or branched alkoxy group or alkenyloxy group having 1 to 6 carbon atoms;
(a4) a naphthol derivative of formula (2) or (3):

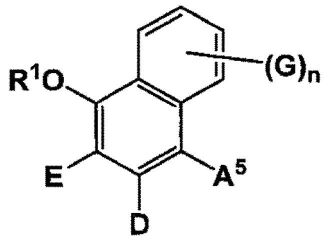
(2)

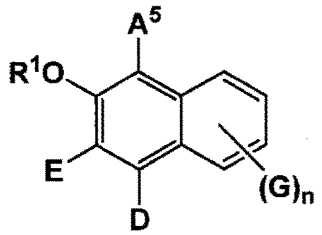
(3)

wherein

$R^1$ represents a hydrogen atom or a methyl group,
$A^5$ represents a hydrogen atom, a linear or branched alkyl group or alkenyl group having 1 to 12 carbon atoms, an optionally substituted aralkyl group or arylalkenyl group having 7 to 12 carbon atoms, a linear or branched alkoxy group or alkenyloxy group having 1 to 6 carbon atoms, a halogen atom or -CO-$R^2$ ($R^2$ is a linear or branched alkyl group or alkenyl group having 1 to 12 carbon atoms, an optionally substituted aralkyl group or arylalkenyl group having 7 to 12 carbon atoms, or an optionally substituted aromatic hydrocarbon group having 6 to 12 carbon atoms),
D represents a hydrogen atom, a hydroxy group, a methyl group, or a linear or branched alkoxy group or alkenyloxy group having 1 to 12 carbon atoms,

E represents a hydrogen atom, a hydroxy group, a linear or branched alkyl group or alkenyl group having 1 to 6 carbon atoms, or a linear or branched alkoxy group or alkenyloxy group having 1 to 6 carbon atoms, and
G represents a hydroxy group, a linear or branched alkyl group or alkenyl group having 1 to 6 carbon atoms, or an alkoxy group having 1 to 6 carbon atoms, and n represents an integer of 0 to 2; and

(a5) a flavan-3-ol derivative of formula (4):

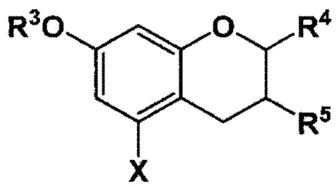

(4)

wherein

$R^3$ represents a hydrogen atom or a methyl group,
X represents a hydrogen atom, a hydroxy group or a methoxy group,
$R^4$ represents an aromatic hydrocarbon group optionally substituted with up to 3 hydroxy groups or methoxy groups and optionally forming a fused ring with 1,3-dioxolane, and
$R^5$ represents a hydroxy group, a methoxy group, an aromatic hydrocarbon group optionally substituted with up to 3 hydroxy groups or methoxy groups and optionally forming a fused ring with 1,3-dioxolane, or an arylcarbonyloxy group or aralkylcarbonyloxy group optionally substituted with up to 3 hydroxy groups or methoxy groups;

(B): a salt; and
(C): water.

2. The fiber-treating agent according to claim 1, wherein the component (A) is a phenolic compound selected from the group consisting of the components (a3) to (a5).

3. The fiber-treating agent according to claim 1 or 2, wherein a content of the component (A) in the fiber-treating agent is 0.1 mass% or more and 80 mass% or less.

4. The fiber-treating agent according to any one of claims 1 to 3, wherein a content of the component (B) in the fiber-treating agent is 0.01 mass% or more and 25 mass% or less.

5. The fiber-treating agent according to any one of claims 1 to 4, wherein a molar ratio of the component (B) to the component (A), (B)/(A), is 0.01 or more and less than 20.

6. A method for treating fibers, comprising the following step (i):
step (i) immersing fibers in the fiber-treating agent according to any one of claims 1 to 5.

7. The method for treating fibers according to claim 6, wherein the following step (ii-a) is carried out after the step (i):
step (ii-a) immersing fibers in a post-crosslinking agent containing components (D) and (C):

(D): at least one formaldehyde derivative selected from the group consisting of formaldehyde, a hydrate of formaldehyde, glyoxylic acid, a hydrate of glyoxylic acid, a glyoxylic acid salt, glyoxal, a hydrate of glyoxal, glutaraldehyde, and a hydrate of glutaraldehyde; and
(C): water.

8. The method for treating fibers according to claim 6, wherein the following step (ii-b) is carried out after the step (i):
step (ii-b) immersing fibers in a post-crosslinking agent containing components (E) and (C):

(E): a compound having a structure in which a methylol group is bonded to each of two nitrogen atoms in the molecule; and
(C): water.

**9.** The method for treating fibers according to any one of claims 6 to 8, wherein the step of immersing the fibers in a surface finish agent containing the following components (F) and (C) is further carried out after the step (i), step (ii-a) or step (ii-b):

(F) an epoxyaminosilane copolymer which is a reaction product of the following compounds (a) to (d):

(a) polysiloxane having at least two oxiranyl groups or oxetanyl groups;
(b) polyether having at least two oxiranyl groups or oxetanyl groups;
(c) aminopropyltrialkoxysilane; and
(d) a compound selected from the group consisting of the following primary and secondary amines:

- primary amine: methylamine, ethylamine, propyleneamine, ethanolamine, isopropylamine, butylamine, isobutylamine, hexylamine, dodecylamine, oleylamine, aniline, aminopropyltrimethylsilane, aminopropyltriethylsilane, aminomorpholine, aminopropyldiethylamine, benzylamine, naphthylamine, 3-amino-9-ethylcarbazole, 1-aminoheptafluorohexane and 2,2,3,3,4,4,5,5,6,6,7,7,8,8,8-pentadecafluoro-1-octaneamine; and
- secondary amine: methylethylamine, methyloctadecylamine, diethanolamine, dibenzylamine, dihexylamine, dicyclohexylamine, piperidine, pyrrolidine, phthalimide and polymer amine; and

(C) water.

**10.** A method for producing fibers for hair ornament products, comprising the step of treating fibers by the method for treating fibers according to any one of claims 6 to 9.

**11.** A method for producing a hair ornament product, comprising the step of treating fibers by the method for treating fibers according to any one of claims 6 to 9.

**12.** A fiber for hair ornament products, comprising the following component (A):
(A): a phenolic compound selected from the group consisting of the following components (a1) to (a5):

(a1) 2,3,3',4,4',5'-hexahydroxybenzophenone;
(a2) 5,5',6,6'-tetrahydroxy-3,3,3',3'-tetramethyl-1,1'-spirobiindan;
(a3) a resorcin derivative of formula (1):

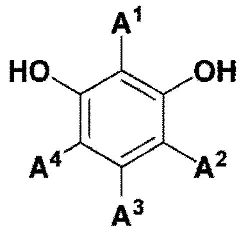

(1)

wherein
$A^1$ to $A^4$ are the same or different, and each represents a hydrogen atom, a hydroxy group, a halogen atom, a sulfonic acid group or a salt thereof, a linear or branched alkyl group or alkenyl group having 1 to 6 carbon atoms, or a linear or branched alkoxy group or alkenyloxy group having 1 to 6 carbon atoms;
(a4) a naphthol derivative of formula (2) or (3):

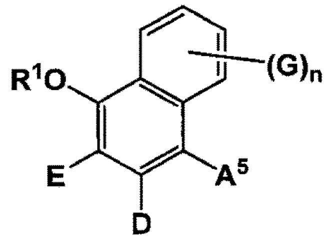

(2)

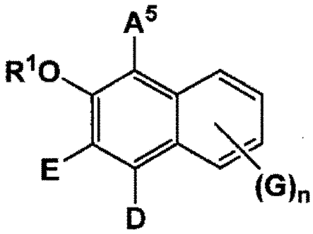

(3)

wherein

$R^1$ represents a hydrogen atom or a methyl group,
$A^5$ represents a hydrogen atom, a linear or branched alkyl group or alkenyl group having 1 to 12 carbon atoms, an optionally substituted aralkyl group or arylalkenyl group having 7 to 12 carbon atoms, a linear or branched alkoxy group or alkenyloxy group having 1 to 6 carbon atoms, a halogen atom or -CO-$R^2$ ($R^2$ is a linear or branched alkyl group or alkenyl group having 1 to 12 carbon atoms, an optionally substituted aralkyl group or arylalkenyl group having 7 to 12 carbon atoms, or an optionally substituted aromatic hydrocarbon group having 6 to 12 carbon atoms),
D represents a hydrogen atom, a hydroxy group, a methyl group, or a linear or branched alkoxy group or alkenyloxy group having 1 to 12 carbon atoms,
E represents a hydrogen atom, a hydroxy group, a linear or branched alkyl group or alkenyl group having 1 to 6 carbon atoms, or a linear or branched alkoxy group or alkenyloxy group having 1 to 6 carbon atoms, and
G represents a hydroxy group, a linear or branched alkyl group or alkenyl group having 1 to 6 carbon atoms, or an alkoxy group having 1 to 6 carbon atoms, and n represents an integer of 0 to 2; and

(a5) a flavan-3-ol derivative of formula (4):

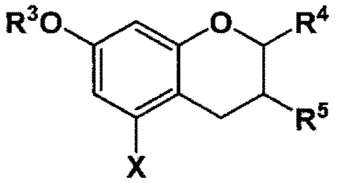

(4)

wherein

$R^3$ represents a hydrogen atom or a methyl group,
X represents a hydrogen atom, a hydroxy group or a methoxy group,
$R^4$ represents an aromatic hydrocarbon group optionally substituted with up to 3 hydroxy groups or methoxy groups and optionally forming a fused ring with 1,3-dioxolane, and
$R^5$ represents a hydroxy group, a methoxy group, an aromatic hydrocarbon group optionally substituted with up to 3 hydroxy groups or methoxy groups and optionally forming a fused ring with 1,3-dioxolane, or an arylcarbonyloxy group or aralkylcarbonyloxy group optionally substituted with up to 3 hydroxy groups or methoxy groups.

**13.** The fiber for hair ornament products according to claim (12), wherein the component (A) is a phenolic compound selected from the group consisting of the components (a3) to (a5).

**14.** A hair ornament product having, as a constituent element, fibers comprising the following component (A):
(A): a phenolic compound selected from the group consisting of the following components (a1) to (a5):

(a1) 2,3,3',4,4',5'-hexahydroxybenzophenone;
(a2) 5,5',6,6'-tetrahydroxy-3,3,3',3'-tetramethyl-1,1'-spirobiindan;
(a3) a resorcin derivative of formula (1):

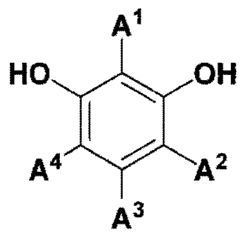

(1)

wherein
$A^1$ to $A^4$ are the same or different, and each represents a hydrogen atom, a hydroxy group, a halogen atom, a sulfonic acid group or a salt thereof, a linear or branched alkyl group or alkenyl group having 1 to 6 carbon atoms, or a linear or branched alkoxy group or alkenyloxy group having 1 to 6 carbon atoms;
(a4) a naphthol derivative of formula (2) or (3):

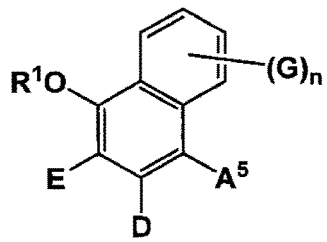

(2)

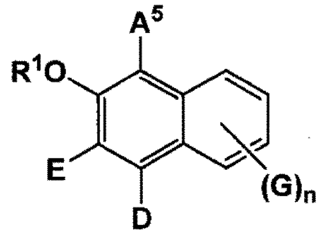

(3)

wherein

$R^1$ represents a hydrogen atom or a methyl group,
$A^5$ represents a hydrogen atom, a linear or branched alkyl group or alkenyl group having 1 to 12 carbon atoms, an optionally substituted aralkyl group or arylalkenyl group having 7 to 12 carbon atoms, a linear or branched alkoxy group or alkenyloxy group having 1 to 6 carbon atoms, a halogen atom or -CO-$R^2$ ($R^2$ is a linear or branched alkyl group or alkenyl group having 1 to 12 carbon atoms, an optionally substituted aralkyl group or arylalkenyl group having 7 to 12 carbon atoms, or an optionally substituted aromatic hydrocarbon group having 6 to 12 carbon atoms),
D represents a hydrogen atom, a hydroxy group, a methyl group, or a linear or branched alkoxy group or alkenyloxy group having 1 to 12 carbon atoms,
E represents a hydrogen atom, a hydroxy group, a linear or branched alkyl group or alkenyl group having 1 to 6 carbon atoms, or a linear or branched alkoxy group or alkenyloxy group having 1 to 6 carbon atoms, and
G represents a hydroxy group, a linear or branched alkyl group or alkenyl group having 1 to 6 carbon atoms, or an alkoxy group having 1 to 6 carbon atoms, and n represents an integer of 0 to 2; and

(a5) a flavan-3-ol derivative of formula (4):

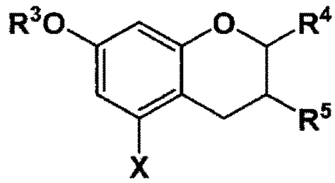

(4)

wherein

$R^3$ represents a hydrogen atom or a methyl group,
X represents a hydrogen atom, a hydroxy group or a methoxy group,
$R^4$ represents an aromatic hydrocarbon group optionally substituted with up to 3 hydroxy groups or methoxy groups and optionally forming a fused ring with 1,3-dioxolane, and
$R^5$ represents a hydroxy group, a methoxy group, an aromatic hydrocarbon group optionally substituted with up to 3 hydroxy groups or methoxy groups and optionally forming a fused ring with 1,3-dioxolane, or an arylcarbonyloxy group or aralkylcarbonyloxy group optionally substituted with up to 3 hydroxy groups or methoxy groups.

**15.** The hair ornament product according to claim 14, wherein the component (A) is a phenolic compound selected from the group consisting of the components (a3) to (a5).

**INTERNATIONAL SEARCH REPORT**

International application No.
**PCT/JP2022/016339**

**A. CLASSIFICATION OF SUBJECT MATTER**

***D06M 13/152***(2006.01)i; ***D06M 11/13***(2006.01)i; ***D06M 11/45***(2006.01)i; ***D06M 11/54***(2006.01)i; ***D06M 13/123***(2006.01)i; ***D06M 13/127***(2006.01)i; ***D06M 13/207***(2006.01)i; ***D06M 13/256***(2006.01)i; ***D06M 13/288***(2006.01)i; ***D06M 13/332***(2006.01)i; ***D06M 15/39***(2006.01)i; ***D06M 15/65***(2006.01)i; *D06M 101/14*(2006.01)n
FI: D06M13/152; D06M11/13; D06M11/45; D06M11/54; D06M13/123; D06M13/127; D06M13/207; D06M13/256; D06M13/288; D06M13/332; D06M15/39; D06M15/65; D06M101:14

According to International Patent Classification (IPC) or to both national classification and IPC

**B. FIELDS SEARCHED**

Minimum documentation searched (classification system followed by classification symbols)

D06M13/152; D06M11/13; D06M11/45; D06M11/54; D06M13/123; D06M13/127; D06M13/207; D06M13/256; D06M13/288; D06M13/332; D06M15/39; D06M15/65; D06M101/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 50-127976 A (RHONE-POULENC-TEXTILE) 08 October 1975 (1975-10-08) example 1 | 1-6 |
| A | | 7-15 |
| X | CN 106283648 A (CHENGLU KAIER GARMENT (SUZHOU) CO., LTD.) 04 January 2017 (2017-01-04) examples 1-4 | 1-6 |
| A | | 7-15 |
| X | JP 2007-39834 A (PIAS ARISE KK) 15 February 2007 (2007-02-15) example 2 | 1-6, 10-15 |
| A | | 7-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2022/016339**

**C. DOCUMENTS CONSIDERED TO BE RELEVANT**

| Category* | Citation of document, with indication, where appropriate, of the relevant passages | Relevant to claim No. |
|---|---|---|
| X | WO 2019/159866 A1 (KAO CORP.) 22 August 2019 (2019-08-22) examples 1-12, claims 1, 4-7, 10 | 12-15 |
| A | | 1-11 |

Form PCT/ISA/210 (second sheet) (January 2015)

**INTERNATIONAL SEARCH REPORT**
**Information on patent family members**

International application No.
**PCT/JP2022/016339**

| Patent document cited in search report | Publication date (day/month/year) | Patent family member(s) | Publication date (day/month/year) |
|---|---|---|---|
| JP 50-127976 A | 08 October 1975 | US 3983286 A<br>example 1 | |
| CN 106283648 A | 04 January 2017 | (Family: none) | |
| JP 2007-39834 A | 15 February 2007 | CN 1907163 A | |
| WO 2019/159866 A1 | 22 August 2019 | US 2021/0059336 A1<br>examples 1-12, claims 1, 4-7, 10<br>EP 3753435 A1<br>CN 111757683 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019143281 A


### Non-patent literature cited in the description


- **MIZUKAMI et al.** *J. Agric. Food Chem.,* 2007, vol. 55, 4957-4964